(19) Europäisches Patentamt / European Patent Office / Office européen des brevets

(11) **EP 2 787 017 A2**

(12) **EUROPEAN PATENT APPLICATION**

(43) Date of publication:
**08.10.2014 Bulletin 2014/41**

(51) Int Cl.:
***C08G 59/18*** *(2006.01)* ***C08G 59/24*** *(2006.01)*

(21) Application number: **14156544.0**

(22) Date of filing: **25.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.03.2013 US 201361776985 P**

(71) Applicant: **Dow Global Technologies LLC**
**Midland, MI 48674 (US)**

(72) Inventors:
- **Drumright, Ray E.**
  **Midland, MI Michigan 48640 (US)**
- **Hefner, Jr., Robert E.**
  **Rosharon, TX Texas 77583 (US)**

(74) Representative: **Buckley, Guy Julian**
**Patent Outsourcing Limited**
**1 King Street**
**Bakewell**
**Derbyshire DE45 1DZ (GB)**

# (54) Epoxy resin adducts and thermosets thereof

(57) An epoxy resin adduct comprising the reaction product of an epoxy resin comprising a diglycidyl ether of Formula 1 as defined herein, and at least one reactive compound having two or more active hydrogen atoms per molecule, wherein the active hydrogen atoms are reactive with epoxide groups are described. The diglycidyl ether contains a cycloaliphatic ring of 3-5 carbon atoms. Curable compositions, methods of curing, cured compositions, and articles comprising the epoxy resin adducts are also disclosed. The epoxy resin adduct has improved cure behavior and provides cured compositions having increased glass transition temperature, good weatherability, and a low total chlorine content.

EP 2 787 017 A2

**Description**

BACKGROUND OF THE INVENTION

The disclosure generally relates to epoxy resin adducts, thermosets thereof, methods of making same, and articles thereof.

Epoxy resins are well-known polymers with diverse applications such as metal can coatings, general industrial metal and marine protective coatings, automotive primers, printed circuit boards, semiconductor encapsulants, adhesives, and aerospace composites. Recently, epoxy resins based on cyclohexanedimethanol diglycidyl ethers have been shown to be useful in applications such as electrical laminates, coatings, castings, and adhesives due to their improved flexibility, weatherability, moisture resistance, and reduced viscosity relative to epoxy resins based on bisphenol A. Adducts of cyclohexanedimethanol diglycidyl ethers with reactive compounds having two or more reactive hydrogen atoms per molecule, for example polyamines, have been shown to be useful as well. However, there is room for improvement in the properties of adducts of cyclohexanedimethanol diglycidyl ethers with reactive compounds. For example, the glass transition temperature of cured epoxy resins based on adducts of cyclohexanedimethanol diglycidyl ethers can be lower than desirable for certain applications. A reduction in the cure completion temperature while maintaining rapid cure onset is also desirable, so that the epoxy resin can be used in applications requiring low temperature cure. Also desirable is reduction in the cure enthalpy to prevent thermally induced damage, such as cracking, to the cured product. It is also desirable that the epoxy resin be aliphatic, so that it has good weatherability compared to epoxy resins based on bisphenol A. It is also desirable that the epoxy resin has a low total chlorine content in order to reduce the potential corrosivity of the cured epoxy resin.

SUMMARY OF THE INVENTION

Disclosed herein is an epoxy resin adduct comprising the reaction product of: an epoxy resin comprising a diglycidyl ether of Formula 1

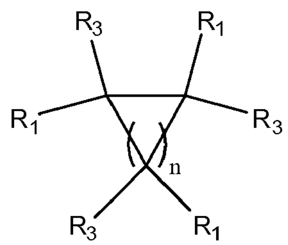 1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and at least one reactive compound having two or more active hydrogen atoms per molecule, wherein the active hydrogen atoms are reactive with epoxide groups.

Another embodiment is a method of making an epoxy resin adduct comprising reacting an epoxy resin comprising the diglycidyl ether of Formula 1, wherein n, $R_1$, and $R_3$ are as defined above, with at least one reactive compound having two or more active hydrogen atoms per molecule, wherein the active hydrogen atoms are reactive with epoxide groups.

Another embodiment is a curable epoxy resin composition comprising the epoxy resin adduct and at least one epoxy resin.

Another embodiment is a method of curing a curable epoxy resin composition comprising reacting the epoxy resin adduct with at least one epoxy resin.

Another embodiment is an B-staged epoxy resin made by partially curing the curable epoxy resin composition.

Another embodiment is a method of B-staging an epoxy resin comprising partially curing the curable epoxy resin composition.

Another embodiment is a cured epoxy resin comprising a reaction product of the epoxy resin adduct and at least one epoxy resin.

Another embodiment is an article made from the curable epoxy resin composition.

These and other embodiments are described in detail below.

DETAILED DESCRIPTION OF THE INVENTION

The present inventors have discovered that adducts of epoxy resins comprising diglycidyl ethers of cycloaliphatic diols, wherein the cycloaliphatic group is a 3-, 4-, or 5-membered ring, with a reactive compound having two or more reactive hydrogen atoms are useful as curing agents for epoxy resins with improved properties over adducts of cyclohexanedimethanol diglycidyl ethers. The use of these adducts as curing agents provides novel cured epoxy resins comprising 3-, 4-, or 5-membered cycloaliphatic groups. When the cycloaliphatic epoxy resin adduct is used to cure another aliphatic and/or cycloaliphatic epoxy resins, the cured composition is fully aliphatic/cycloaliphatic and is thus useful in applications requiring a non-aromatic structure, for example for epoxy resins that must be weatherable.

The present inventors have also discovered that reducing the ring size of the cycloaliphatic group of adducts of cyclohexanedimethanol diglycidyl ethers provides cured epoxy resins having increased glass transition temperatures, which is advantageous in many applications. Due to their high reactivity, the epoxy resin adducts also have improved cure behavior. The epoxy resin adducts cure at lower temperatures while maintaining rapid cure onset, which makes them suitable for room temperature cure applications, and they have reduced cure enthalpy and cracking during cure. Advantageously, the epoxy resin adducts also have a low total chlorine content (including ionic, hydrolysable, and total chloride), which results in reduced potential corrosivity and superior shelf stability. The epoxy resin adducts are also non-aromatic, so that they are resistant to ultraviolet (UV) light and have good weatherability compared to epoxy resin adducts based on bisphenol A epoxy resins. The high reactivity and inherently low to non-existent total chlorine content of the epoxy resin adducts, and the relatively high glass transition temperature of cured compositions comprising the epoxy resin adducts, are especially advantageous for coatings, electronics, and electrical laminate applications. Thus, the epoxy resin adducts are ideally suited as components in ambient cure, UV-resistant coating compositions, and as a replacement or supplement for the curing agents used in thermosets.

The terms "a" and "an" do not denote a limitation of quantity, but rather the presence of at least one of the referenced item. The term "or" means "and/or." The open-ended transitional phrase "comprising" encompasses the intermediate transitional phrase "consisting essentially of" and the close-ended phrase "consisting of." Claims reciting one of these three transitional phrases, or with an alternate transitional phrase such as "containing" or "including" can be written with any other transitional phrase unless clearly precluded by the context or art. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and are independently combinable.

"Combination" can refer to blends, mixtures, alloys, reaction products, and the like. The terms "first," "second," and the like, herein do not denote any order, quantity, or importance, but rather are used to denote one element from another. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements can be combined in any suitable manner in the various embodiments.

Compounds are described herein using standard nomenclature and chemical structure diagrams. For example, any position not substituted by any indicated group is understood to have its valency filled by indicated bonds, and/or a hydrogen atom(s). The term "alkyl" as used herein refers to straight chain and branched aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "cycloalkyl" as used herein refers to a cycloaliphatic group, optionally comprising straight chain or branched aliphatic substituent(s), and having the specified number of carbon atoms. The term "aryl" as used herein refers to an aromatic group, optionally comprising straight or branched chain aliphatic substituent(s), and having the specified number of carbon atoms. The term "hydrocarbyl" as used herein refers to any aliphatic, cycloaliphatic, aromatic, aryl substituted aliphatic or cycloaliphatic, or aliphatic or cycloaliphatic substituted aromatic groups. The aliphatic and cycloaliphatic groups can be saturated or unsaturated. The term "hydrocarbyloxy" refers to a hydrocarbyl group having an oxygen linkage between it and the carbon atom to which it is attached.

As used herein, the term "thermoset" refers to a composition that can solidify or "set" irreversibly when heated. The terms "curable" and "thermosettable" are synonyms and mean the composition is capable of being converted to a cured or thermoset state or condition. The term "cured" or "thermoset" is defined by L. R. Whittington in Whittington's Dictionary of Plastics (1968) on page 239 as follows: "Resin or plastics compounds which in their final state as finished articles are substantially infusible and insoluble. Thermosetting resins are often liquid at some stage in their manufacture or processing, and are cured by heat, catalysis, or some other chemical means." After being fully cured, thermosets do not flow appreciably, and cannot be substantially reshaped by application of heat. The term "B-stage" as used herein refers to a thermoset resin that has been partially cured so that the product still has full to partial solubility in a solvent

such as an alcohol or a ketone.

The epoxy resin adduct comprises the reaction product of: an epoxy resin comprising a diglycidyl ether of Formula 1

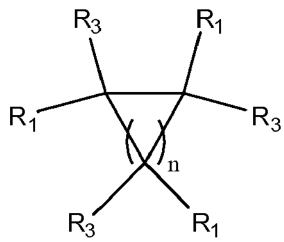

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and at least one reactive compound having two or more active hydrogen atoms per molecule, wherein the active hydrogen atoms are reactive with epoxide groups.

The diglycidyl ether comprises one or more of a cyclopropane ring, a cyclobutane ring, and a cyclopentane ring, corresponding to n = 1, 2 and 3, respectively, in Formula 1. Each glycidyl ether group independently has the Formula 2

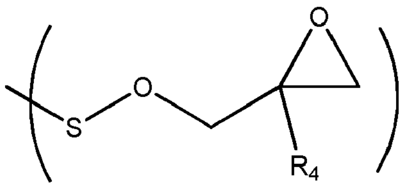

2

wherein $R_4$ is hydrogen or $C_{1-4}$ alkyl, and S is a direct bond, $C_{1-12}$ alkylene, or $C_{6-24}$ arylene.

Examples of the diglycidyl ether are cyclobutane-1,3-diglycidyl ether, cyclobutane-1,2-diglycidyl ether, mono-$C_{1-4}$ alkyl-cyclobutane-1,3-diglycidyl ethers, mono-$C_{1-4}$ alkyl-cyclobutane-1,2-diglycidyl ethers, di-$C_{1-4}$ alkyl-cyclobutane-1,3-diglycidyl ethers, di-$C_{1-4}$ alkyl-cyclobutane-1,2-diglycidyl ethers, tri-$C_{1-4}$ alkyl-cyclobutane-1,3-diglycidyl ethers, tetra-$C_{14}$ alkyl-cyclobutane diglycidyl ethers, cyclopropane-1,2-diglycidyl ether, mono-$C_{1-4}$ alkyl-cyclopropane-1,2-diglycidyl ethers, di-$C_{1-4}$ alkyl-cyclopropane-1,2-diglycidyl ethers, cyclopentane-1,2-diglycidyl ether, cyclopentane-1,3-diglycidyl ether, mono-$C_{1-4}$ alkyl-cyclopentane-1,2-diglycidyl ethers, mono-$C_1$-$_4$ alkyl-cyclopentane-1,3-diglycidyl ethers, di-$C_{1-4}$ alkyl-cyclopentane-1,2-diglycidyl ethers, di-$C_{1-4}$ alkyl-cyclopentane-1,3-diglycidyl ethers, tri-$C_{14}$ alkyl-cyclopentane-1,2-diglycidyl ethers, tri-$C_{1-4}$ alkyl-cyclopentane-1,3-diglycidyl ethers, tetra-$C_{1-4}$ alkyl-cyclopentane-1,2-diglycidyl ethers, tetra-$C_{1-4}$ alkyl-cyclopentane-1,3-diglycidyl ethers, penta-$C_{1-4}$ alkyl-cyclopentane-1,2-diglycidyl ethers, penta-$C_{1-4}$ alkyl-cyclopentane-1,3-diglycidyl ethers, hexa-$C_{1-4}$ alkyl-cyclopentane-1,2-diglycidyl ethers, hexa-$C_{1-4}$ alkyl-cyclopentane-1,3-diglycidyl ethers, and a combination comprising one or more of the foregoing. In some embodiments, the diglycidyl ether comprises cis- and trans-2,2,4,4-tetramethylcyclobutane-1,3-diglycidyl ether.

The epoxy resin can be formed by an aqueous epoxidation process. In particular, the epoxy resin can be formed by reacting a diol and an epihalohydrin in the presence of one or more basic acting substance, water, and optionally, one or more catalysts and/or organic solvents. Thus, a method of making the diglycidyl ether comprises the steps of: (a) forming a reaction mixture comprising a diol of Formula 3

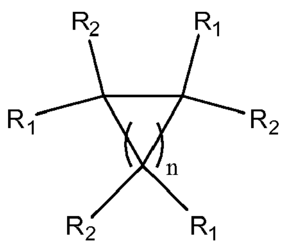

3

wherein n and $R_1$ are as defined above, and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the mixture of step (a); (c) washing the mixture of step (b) with an aqueous solvent to substantially remove

salts to form the epoxy resin comprising a diglycidyl ether of Formula 1,

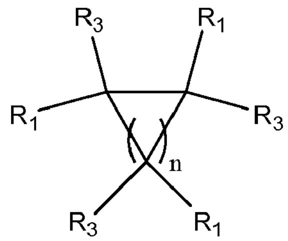

1

wherein n, $R_1$, and $R_3$ are as defined above, with the proviso that the diglycidyl ether has two glycidyl ether groups; and (d) isolating the diglycidyl ether from the reaction mixture. All of the above-described variations in the epoxy resin apply as well to the method of making the epoxy resin.

Examples of the diol of Formula 3 are cyclobutane-1,3-diol, cyclobutane-1,2-diol, mono-$C_{1-4}$ alkyl-cyclobutane-1,3-diols, mono-$C_{1-4}$ alkyl-cyclobutane-1,2-diols, di-$C_{1-4}$ alkyl-cyclobutane-1,3-diols, di-$C_{1-4}$ alkyl-cyclobutane-1,2-diols, tri-$C_{1-4}$ alkyl-cyclobutane-1,3-diols, tetra-$C_{1-4}$ alkyl-cyclobutane diols, cyclopropane-1,2-diol, mono-$C_{1-4}$ alkyl-cyclopropane-1,2-diols, di-$C_{1-4}$ alkyl-cyclopropane-1,2-diols, cyclopentane-1,2-diol, cyclopentane-1,3-diol, mono-$C_1$-$_4$ alkyl-cyclopentane-1,2-diols, mono-$C_{1-4}$ alkyl-cyclopentane-1,3-diols, di-$C_{1-4}$ alkyl-cyclopentane-1,2-diols, di-$C_{1-4}$ alkyl-cyclopentane-1,3-diols, tri-$C_{1-4}$ alkyl-cyclopentane-1,2-diols, tri-$C_{1-4}$ alkyl-cyclopentane-1,3-diols, tetra-$C_1$-$_4$ alkyl-cyclopentane-1,2-diols, tetra-$C_{1-4}$ alkyl-cyclopentane-1,3-diols, penta-$C_{1-4}$ alkyl-cyclopentane-1,2-diols, penta-$C_{1-4}$ alkyl-cyclopentane-1,3-diols, hexa-$C_{1-4}$ alkyl-cyclopentane-1,2-diols, hexa-$C_{1-4}$ alkyl-cyclopentane-1,3-diols, or a combination comprising one or more of the foregoing. In some embodiments, the diol comprises cis- and trans-2,2,4,4-tetramethylcyclobutane-1,3-diol.

The epihalohydrin has the Formula 4

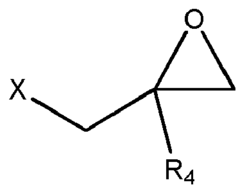

4

wherein $R_4$ is hydrogen or a $C_{1-4}$ alkyl group, and X is F, Cl, Br, or I. Examples of epihalohydrins are epifluorohydrin, epichlorohydrin, epibromohydrin, epiiodohydrin, substituted epihalohydrins, such as methylepichlorohydrin or chloroisobutylene oxide, or combinations comprising one or more of the foregoing. The epihalohydrin can serve not only as reactant but also as solvent or co-solvent if another solvent is employed.

The phase transfer catalyst can comprise one or more of quaternary ammonium, pyridinium, sulfonium, phosphonium, and thiazolium salts. Examples of phase transfer catalyst are n-benzylcinchonidinium chloride, n-benzylcinchoninium chloride benzyldimethylhexadecylammonium chloride, benzyldimethyltetradecylammonium chloride, benzyltributylammonium bromide, benzyltributylammonium chloride, benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, benzyltriphenylphosphonium bromide, diethylmethylpropylammonium bromide, (-)-N,N-dimethylephedrinium bromide, 3,4-dimethyl-5-(2-hydroxyethyl)-thiazolium iodide, dodecylethyldimethylammonium bromide, (-)-N-dodecyl-N-methylephedrinium bromide, ethyldimethylpropylammonium bromide, ethylhexadecyldimethylammonium bromide, 3-ethyl -5-(2- hydroxyethyl)-4-methylthiazolium bromide, ethyltriphenylphosphonium bromide, hexadecylpyridinium bromide, hexadecylpyridinium chloride, hexadecyltributylphosphonium bromide, hexadecyltrimethylammonium bromide, hexadecyltrimethylammonium chloride, methyltrioctylammonium bromide, methyltrioctylammonium chloride, methyltrioctylammonium iodide, octadecyltrimethylammonium bromide, phenyltrimethylammonium bromide, phenyltrimethylammonium chloride, tetrabutylammonium bromide, tetrabutylammonium chloride, tetrabutylammonium hexafluorophosphate, tetrabutylammonium hydrogen sulphate, tetrabutylammonium hydroxide, tetrabutylammonium methanesulphonate, tetrabutylammonium perchlorate, tetrabutylammonium tetrafluoroporate, tetrabutylammonium tetraphenylborate, tetrabutylammonium trifluoromethanesulphonate, tetrabutylphosphonium chloride, tetradecyltrimethylammonium bromide, tetradodecylammonium bromide, tetradodecylammonium perchlorate, tetraethylammonium bromide, tetraethylammonium chloride, tetraethylammonium hexafluorophosphate, tetraethylammonium hydroxide, tetraethylammonium perchlorate, tetraethylammonium tetrafluoroburate, tetraethylammonium trifluoromethanesulphonate, tetraheptylammonium bromide, tetrahexylammonium benzoate, tetrahexylammonium bromide, tetrahexylammonium chloride, tetrahexylammonium hydrogen sulphate, tetrahexylammonium iodide, tetrahexylammonium perchlorate, tetrakis-(decyl)-ammonium bromide, tetrakis-(decyl)- ammonium perchlorate, tetraoctylammonium bromide, tetraoctylammonium perchlorate, tetrapentylammonium bromide, tetrapentylammonium iodide, tetraphenylarsonium chloride, tetraphenylphosphonium bromide, tetraphenylphosphonium chloride, tetrapropylammonium bromide, tetrapropylammonium hydroxide, tetrapropylammonium iodide, tetrapropylammonium perchlorate, tetrapropylammonium tetrafluoroborate, tributylheptylammonium bromide tributylmethylammonium bromide, tributylmethylammonium chloride, tributylmethylammonium hydroxide, tributylmethylammonium iodide, tributylpentylammonium bromide, tricaprylmethylammonium chloride ("ALIQUAT™ 336"), triethylammonium bromide, and combinations comprising one or more of the foregoing. In some embodiments, the phase transfer catalyst is selected from benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, and a combination comprising one or more of the foregoing. The phase transfer catalyst can be added in an initial amount of 0.01 to 5 weight %, more specifically from 0.05 to 2.5 weight %, based on the weight of the diol. In some embodiments, an additional amount of phase transfer catalyst is added to the reaction mixture after one or more of steps (c).

The method optionally employs an organic solvent. The organic solvent, if used, can comprise aromatic hydrocarbons (such as toluene, benzene, and xylene), aliphatic hydrocarbons (such as pentane, hexane, heptane, and octane), ethers and cyclic ethers (such as diethyl ether, dibutyl ether, dioxane, ethylene glycol dimethyl ether, and tetrahydrofuran), halogenated hydrocarbons (such as carbon tetrachloride, trichloroethylene, chloroform, dichloromethane, ethylene dichloride, methyl chloroform, and tetrachloroethane), sulfoxides, amides (such as N,N-dimethylformamide and N,N-dimethylacetamide), aliphatic nitriles (such as acetonitrile), or a combination comprising one or more of the foregoing. The organic solvent can be present in an amount of 1 to 250 weight %, specifically 1 to 50 weight % based on the total weight of the diol.

The method comprises contacting a basic acting substance and water with the mixture of diol, epihalohydrin, phase transfer catalyst, and optional organic solvent. Basic acting substances (bases) include alkali metal or alkaline earth metal hydroxides, carbonates and bicarbonates, and a combination thereof. Examples of basic acting substances are NaOH, KOH, LiOH, $Ca(OH)_2$, $Ba(OH)_2$, $Mg(OH)_2$, $Mn(OH)_2$, $Na_2CO_3$, $K_2CO_3$, $Li_2CO_3$, $CaCO_3$, $BaCO_3$, $Mg_2CO_3$, $MnCO_3$, $NaHCO_3$, $KHCO_3$, $MgHCO_3$, $LiHCO_3$, $Ca(HCO_3)_2$, $Ba(HCO_3)_2$, $Mn(HCO_3)_2$, and a combination thereof. In some embodiments, the basic acting substance is an alkali metal hydroxides, such as NaOH or KOH, both which can be added as aqueous solutions.

The diol, the epihalohydrin, the phase transfer catalyst, and optionally the organic solvent can be added to a reactor in any order. The equivalent ratio of hydroxyl groups in the diol to epihalohydrin can be 1:1 to 1:25, specifically 1:1.5 to 1:5, more specifically 1:2 to 1:3. The epoxidation can be conducted under an inert atmosphere such as nitrogen.

Step (b), contacting a basic acting substance with the mixture of step (a) and step (c), washing the mixture of step (b) with an aqueous solvent to substantially remove salts, can be repeated at least once, specifically at least twice, and more specifically at least three times. Thus, the basic acting substance can be added in two or more stages, specifically in three or more stages, and more specifically in four or more stages. The total equivalent ratio of hydroxyl groups in the diol to basic acting substance can be 1:1 to 1:10, specifically 1:1.1 to 1:6, more specifically 1:1.2 to 1:4.5, independently in each step (b). The stoichiometric amount of basic acting substance added at each stage is independent of that added in the other stages. Thus, for example, in stage 1, a 1:1.2 equivalent ratio ofhydroxyl groups in the diol to basic acting substance may be used followed by three additional stages each using a 1:1 equivalent ratio for a total equivalent ratio of 1:4.2 for the four stages. The basic acting substance can be dissolved in water. The concentration of basic acting substance in the water varies depending upon the solubility of the particular basic acting substance employed, the temperature of the water, the viscosity of the resultant solution, and other variables. It is generally desirable to use the most concentrated aqueous basic acting substance which can be practically handled in the epoxidation process. In some embodiments, the basic acting substance is 50 weight % aqueous sodium hydroxide. Agitation is beneficially employed in the epoxidation at a rate such that the reactants are contacted together causing the reaction to progress. Each addition of basic acting substance is generally performed at a rate which maintains the desired temperature range in the reactor either with or without heating or cooling of the reactor. The reaction temperature can be from 20 °C to 75 °C, specifically from 20 °C to 50 °C, and more specifically from 25 °C to 40 °C.

After each stage of basic acting substance addition, the agitation can be stopped, and the formed diglycidyl ether can be washed by the addition of sufficient water to dissolve salts forming a separate aqueous phase. The separated aqueous layer can be removed and discarded and the organic layer recovered and added back into the reactor for use in the next stage of reaction with additional aqueous basic acting substance. Certain diols are incompletely soluble in the organic layer and are observed as a water insoluble precipitate which may be recovered and added back into the reactor for use in the next stage of reaction. A specific diol which exhibits only partial solubility in the organic phase is cis- and trans-2,2,4,4-tetramethylcyclobutane-1,3-diol. Because the phase transfer catalyst is partially or totally soluble in the aqueous phase, additional phase transfer catalyst is generally added to the reactor containing the organic phase after washing with water and prior to addition of more aqueous basic acting substance. Thus, in some embodiments, an additional amount of phase transfer catalyst is added to the reaction mixture after one or more of steps (c). Various

analytical methods such as gas chromatography, high performance liquid chromatography, and gel permeation chromatography can be used to monitor the progress of the epoxidation.

Any unreacted diol of Formula 3 present in each step (c) can be added back to the reaction mixture in each step (b). The diol of Formula 3 can be insoluble, or partly soluble, in the reaction mixture of step (a) comprising the diol, the epihalohydrin, the phase transfer catalyst, and optionally the organic solvent. For example, when the diol of Formula 3 is cis- and trans-2,2,4,4-tetramethylcyclobutane-1,3-diol, the epihalohydrin is epichlorohydrin, and the organic solvent is toluene, unreacted cis- and trans-2,2,4,4-tetramethylcyclobutane-1,3-diol is present as a solid phase in step (c). The solid cis- and trans-2,2,4,4-tetramethylcyclobutane-1,3-diol can be isolated by filtration, for example by vacuum filtration of the step (c) mixture through a fritted glass funnel. The cis- and trans-2,2,4,4-tetramethylcyclobutane-1,3-diol isolated by filtration can then be added back to the organic layer decanted from the aqueous wash layer of step (c), and steps (b) and (c) can be repeated. In this way, the conversion of cis- and trans-2,2,4,4-tetramethylcyclobutane-1,3-diol to cis- and trans-2,2,4,4-tetramethylcyclobutane-1,3-diglycidyl ether can be maximized.

As described above, step (b), contacting a basic acting substance with the mixture of step (a) and step (c), washing the mixture of step (b) with an aqueous solvent to substantially remove salts, can be repeated at least once, specifically at least twice, and more specifically at least three times. In this variation of the method, unreacted diol of Formula 3 present in each step (c) can be isolated and added back to the reaction mixture in each step (b).

Contacting the basic acting substance and water with the mixture of step (a) can be accompanied by removal of water by distillation. The diglycidyl ether can be formed by an azeotropic or anhydrous process, the process comprising the steps of: (a) forming a reaction mixture comprising a diol of Formula 3, wherein n, $R_1$, and $R_2$ are as defined hereinbefore; an epihalohydrin; a phase transfer catalyst; and optionally an organic solvent; (b) contacting a basic acting substance and water with the mixture of step (a) while removing water by distillation; (c) washing the mixture of step (b) with an aqueous solvent to substantially remove salts to form the diglycidyl ether; and (d) isolating the diglycidyl ether. The distillation can be, for example, azeotropic distillation, co-distillation, or flash distillation. The distillation can be conducted under a vacuum sufficient to remove the water at the distillation temperature. In some embodiments, the distillation is azeotropic distillation. The azeotropic distillation can comprise distilling a binary epihalohydrin-water azeotrope or, when organic solvent is present, distilling a ternary epihalohydrin-water-organic solvent azeotrope, to remove the water.

After a final stage of contacting a basic acting substance with the mixture of diol, epihalohydrin, phase transfer catalyst, and optional organic solvent, the epoxy resin can be isolated from the mixture. The isolation can be performed using known methods such as water washing or extraction, solvent extraction, decantation, electrostatic coalescence, gravity filtration, vacuum filtration, centrifugation, distillation, falling film distillation, wiped film distillation, column chromatography, and a combination comprising one or more of the foregoing. The isolation of the epoxy resin can comprise the steps of washing the mixture with water in an amount sufficient to substantially remove salts, and vacuum distillation, for example by rotary evaporation, to remove volatile components such as the organic solvent and unreacted epihalohydrin, when present.

The diglycidyl ether can be isolated from the epoxy resin in high purity by distillation, for example by fractional vacuum distillation or wiped film distillation. During the isolation of the diglycidyl ether by distillation, distillation fractions with lower boiling points ("lights") can be removed from the diglycidyl ether and recovered. The lights can comprise unreacted epihalohydrin and epoxidation by-products such as glycidol and 2-epoxypropyl ether. Recovered epihalohydrin can be recycled. Any unreacted diol can also be recovered and recycled. The residue from fractional distillation after removal of lights, diol, monoglycidyl ethers, diglycidyl ethers, and other volatile components from the epoxy resin, can comprise a concentrated source of oligomer. This oligomer can be a reactant to form the epoxy resin adduct, as an epoxy resin itself, or as a component to be blended, in a controlled amount, with other epoxy resins.

The amount of diglycidyl ether in the epoxy resin can be greater than or equal to 50 area %, specifically greater than or equal to 70 area %, more specifically greater than or equal to 85 area %, more specifically greater than or equal to 90 area %, more specifically greater than or equal to 95 area %, still more specifically greater than or equal to 98 area %, yet more specifically greater than or equal 99 area %, and even more specifically greater than or equal to 99.5 area %, based on total peak area for the epoxy resin as determined by gas chromatography. The target amount of diglycidyl ether in the epoxy resin depends on its intended end use, and is achieved by purification methods described below. The impurities can comprise a monoglycidyl ether, oligomers, and other minor components.

A monoglycidyl ether can be present as an impurity in the epoxy resin. The monoglycidyl ether is of Formula 1, wherein n is 1, 2, or 3; each $R_1$ is independently hydrogen, $C_{1-12}$ alkyl, $C_{3-12}$ cycloalkyl, or $C_{6-24}$ aryl; and each $R_2$ is independently hydrogen, $C_{1-12}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group. The amount of monoglycidyl ether can be 0 to 25 area %, specifically 0 to 10 area %, and more specifically 0 to 5 area %, based on total peak area for the epoxy resin as determined by gas chromatography.

The epoxy resin can further comprise oligomeric epoxy resins, hereinafter referred to as "oligomer(s)", as

impurities. The oligomers are oligomeric reaction products of an epihalohydrin and the diol of Formula 3. The oligomers can comprise greater than one cycloaliphatic ring of Formula 1 linked together by covalent bonds, and/or an epoxide functionality of greater than two. The amount of oligomer present can be 0 to 60 area %, specifically 0 to 40 area %, more specifically 0 to 30 area %, based on total peak area for the epoxy resin as determined by gas chromatography. When isolated, for example by vacuum distillation, the epoxy resin can be essentially free of oligomers. The term "essentially free of oligomers" means that the epoxy resin comprises less than or equal to 1 area %, specifically less than or equal to 0.5 area %, of oligomers, based on total peak area for the epoxy resin as determined by gas chromatography. However, it is not necessary for the epoxy resin to be essentially free of oligomers to serve as a reactant for adduct formation.

Other minor components can be present as impurities in the epoxy resin. Said minor components can be present in an amount of 0 to 10 area %, more specifically 0 to 5 area %, and still more specifically 0 to 0.5 area %, based on the weight of epoxy resin.

In some embodiments, the epoxy resin comprises 60 to 99 area % of the diglycidyl ether; 0 to 10 area % of the monoglycidyl ether; and 1 to 30 area % of oligomers; specifically 75 to 89 area % of the diglycidyl ether; 1 to 5 area % of the monoglycidyl ether; and 10 to 20 weight % of oligomers, based on total peak area for the epoxy resin as determined by gas chromatography.

The epoxy resin can be characterized by epoxide equivalent weight and weight percent oxirane oxygen content. A method for determination of epoxide equivalent weight and weight percent oxirane oxygen content is given by Jay, R.R., "Direct Titration of Epoxy Compounds and Aziridines", Analytical Chemistry, 36, 3, 667-668 (March, 1964). The diglycidyl ether can have an oxirane oxygen content of greater than or equal to 85 %, specifically greater than or equal to 90 %, more specifically greater than or equal to 95 %, still more specifically greater than or equal to 98%, yet more specifically greater than or equal to 99%, and even more specifically greater than or equal to 99.5 %, of the theoretical oxirane oxygen content for the diglycidyl ether. The target oxirane oxygen content depends upon the intended end use for the epoxy resin. In some embodiments, the epoxy resin has an oxirane oxygen content of greater than or equal to 90 % of theoretical.

In some embodiments, the diglycidyl ether comprises cis- and trans-2,2,4,4-tetramethylcyclobutane-1,3-diglycidyl ether. When the diglycidyl ether comprises cis- and trans-2,2,4,4-tetramethylcyclobutane-1,3-diglycidyl ether, the theoretical epoxide equivalent weight is 128.22, and the theoretical oxirane oxygen content is 12.48 weight %. Thus, when the diglycidyl ether comprises cis- and trans-2,2,4,4-tetramethylcyclobutane-1,3-diglycidyl ether, the oxirane oxygen content can be greater than or equal to 10.6 weight % (85% of 12.48 weight %), greater than or equal to 11.2 weight % (90% of 12.48 weight %), specifically greater than or equal to 11.8 weight % (95% of 12.48 weight %), more specifically greater than or equal to 12.2 weight % (98% of 12.48 weight %), and still more specifically, greater than or equal to 12.3 weight % (99% of 12.48 weight %), and yet more specifically greater than or equal to 12.4 weight % (99.5% of 12.48 weight %). When the diglycidyl ether comprises cis- and trans-2,2,4,4-tetramethylcyclobutane-1,3-diglycidyl ether, the epoxide equivalent weight can be less than or equal to 150.8, specifically less than or equal to 142.5, more specifically less than or equal to 134.9, still more specifically less than or equal to 130.8, yet more specifically less than or equal to 129.5, and even more specifically less than or equal to 128.9. In embodiments wherein the diglycidyl ether comprises cis- and trans-2,2,4,4-tetramethylcyclobutane-1,3-diglycidyl ether, the epoxy resin can have an oxirane oxygen content of greater than or equal to 11.2 weight % and an epoxide equivalent weight of less than or equal to 142.5.

Advantageously, the epoxy resin and the epoxy resin adduct can each have a low total chlorine content. Epoxy resins can be made by Lewis-acid catalyzed coupling of diols with epichlorohydrin. Stannous chloride is an example of a Lewis acid that can be used. Epoxy resins formed by this method can comprise up to 5 weight % or more of chlorine, based on the weight of the epoxy resin, and present as chloromethyl groups. In Comparative Example 6, the chloromethyl compounds of Formulae 6, 7, 8, and 9 were detected by GC-MS in a commercial sample of an epoxy resin made from cis- and trans-1,4-cyclohexanedimethanol by Lewis-acid catalyzed coupling. The compound of Formula 7 alone was present at greater than 80 area %, based on total peak area for the epoxy resin as determined by gas chromatography. In contrast, the epoxy resin and the epoxy resin adduct can each have a total chlorine content of less than or equal to 2 weight %, specifically less than or equal to 1 weight %, more specifically less than or equal to 0.5 weight %, still more specifically less than or equal to 0.1 weight %, and yet more specifically less than or equal to 0.01 weight %, based on the weight of the epoxy resin or the epoxy resin adduct. In some embodiments, the epoxy resin and the epoxy resin adduct can each have a total chlorine content of less than or equal to 2 weight %, based on the weight of the epoxy resin. The epoxy resin and the epoxy resin adduct can each have a total chlorine content of essentially zero.

The epoxy resin adduct comprises the reaction product of the epoxy resin comprising a diglycidyl ether of Formula 1 and at least one reactive compound. The reactive compound comprises at least one compound having functional group(s) with two or more active hydrogen atoms per molecule. The functional group(s) bearing active hydrogen atoms are reactive with epoxide groups. The term "active hydrogen atom" as used herein refers to hydrogen atoms bonded to functional groups reactive with epoxide groups. The functional groups bearing active hydrogen atoms differs from other functional groups bearing hydrogen atoms, including those functional groups bearing active hydrogen atoms

which are not reactive with epoxide groups in the reaction forming the epoxy resin adduct, but reactive with epoxide groups when the epoxy resin adduct is cured with one or more other epoxy resins. For example, a reactive compound can have two different functional groups, each bearing at least one active hydrogen atom, with one functional group being inherently more reactive with an epoxide group than the other functional group under the same reaction conditions. The reaction conditions can include the use of a catalyst which favors reaction of an epoxide group with one functional group over the other functional group. Non-active hydrogen atoms include hydrogen atoms of secondary hydroxyl groups which are formed during epoxide ring opening in the reaction of the epoxy resin comprising the diglycidyl ether with at least one reactive compound.

The reactive compound comprising at least one compound having two or more reactive hydrogen atoms per molecule can also comprise aliphatic, cycloaliphatic, or aromatic groups. The aliphatic groups can be branched or unbranched. The aliphatic and cycloaliphatic groups can be saturated or unsaturated, and can comprise one or more substituents which are inert (not reactive) in the process of forming the epoxy resin adduct. The substituents can be bonded to a terminal carbon atom (monovalent) or can link two carbon atoms (divalent). Examples of inert substituents are halogen atoms, specifically chlorine or bromine, nitrile, nitro, alkyloxy, keto, ether (-O-), thioether (-S-), and tertiary amine. An aromatic ring, when present, can comprise one or more heteroatoms such as N, O, or S.

The reactive compound can comprise a di- and polyphenol, a di- or polycarboxylic acid, a di- or polymercaptan, a di- or polyamine, a primary monoamine, a primary sulfonamide, a sulfanilamide, an aminophenol, an aminocarboxylic acid, a phenolic hydroxyl containing carboxylic acid, or a combination thereof. In some embodiments, the reactive compound comprises a di- or polyamine, a primary monoamine, or a combination thereof.

The reactive compound can comprise a di- or polyphenol. Examples of di- and polyphenols include 1,2-dihydroxybenzene (catechol), 1,3-dihydroxybenzene (resorcinol), 1,4-dihydroxybenzene (hydroquinone), 4,4'-isopropylidenediphenol (bisphenol A), 4,4'-dihydroxydiphenylmethane, 3,3',5,5'-tetrabromobisphenol A, 4,4'-thiodiphenol, 4,4'-sulfonyldiphenol, 2,2'-sulfonyldiphenol, 4,4'-dihydroxydiphenyl oxide, 4,4'-dihydroxybenzophenone, 1,1'-bis(4-hydroxyphenyl)-1-phenylethane, 3,3',5,5'-tetrachlorobisphenol A, 3,3'-dimethoxybisphenol A, 3,3',5,5'-tetramethyl-4,4'-dihydroxydiphenyl, 4,4'-dihydroxybiphenyl, 4,4'-dihydroxy-alpha-methylstilbene, 4,4'-dihydroxybenzanilide, 4,4'-dihydroxystilbene, 4,4'-dihydroxy-alpha-cyanostilbene, 1,1-bis(4-hydroxyphenyl)cyclohexane, 1,4-dihydroxy-3,6-dimethylbenzene, 1,4-dihydroxy-3,6-dimethoxybenzene, 1,4-dihydroxy-2-tert-butyibenzene, 1,4-dihydroxy-2-bromo-5-methylbenzene, 1,3-dihydroxy-4-nitrophenol, 1,3-dihydroxy-4-cyanophenol, tris(hydroxyphenyl)methane, the condensation product of a dicyclopentadiene or an oligomer thereof and a phenol or an alkyl- or halogen-substituted phenol, and a combination thereof.

The reactive compound can comprise a di- or polycarboxylic acid. Examples of di- and polycarboxylic acids include 4,4'-dicarboxydiphenylmethane, terephthalic acid, isophthalic acid, 1,4-cyclohexanedicarboxylic acid, 1,6-hexanedicarboxylic acid, 1,4-butanedicarboxylic acid, dicyclopentadienedicarboxylic acid, tris(carboxyphenyl)methane, 1,1-bis(4-carboxyphenyl)cyclohexane, 3,3',5,5'-tetramethyl-4,4'-dicarboxydiphenyl, 4,4'-dicarboxy-alpha-methylstilbene, 1,4-bis(4-carboxyphenyl)-trans-cyclohexane, 1,1'-bis(4-carboxyphenyl)cyclohexane, 1,3-dicarboxy-4-methylbenzene, 1,3-dicarboxy-4-methoxybenzene, 1,3-dicarboxy-4-bromobenzene, and a combination thereof.

The reactive compound can comprise a di- or polymercaptan. Examples of di-and polymercaptans include 1,3-benzenedithiol, 1,4-benzenedithiol, 4,4'-dimercaptodiphenylmethane, 4,4'-dimercaptodiphenyl oxide, 4,4'-dimercapto-alpha-methylstilbene, 3,3',5,5'-tetramethyl-4,4'-dimercaptodiphenyl, 1,4-cyclohexanedithiol, 1,6-hexanedithiol, 2,2'-dimercaptodiethylether, 1,2-dimercaptopropane, bis(2-mercaptoethyl)sulfide, tris(mercaptophenyl)methane, 1,1-bis(4-mercaptophenyl)cyclohexane, and a combination thereof.

The reactive compound can comprise a di- or polyamine. Examples of di- and polyamines include ethylenediamine, diethylenetriamine, triethylenetetramine, tetraethylenepentamine, isophorone diamine, 1,3-bis(aminomethyl)cyclohexane, 1,4-bis(aminomethyl)cyclohexane, 1,2-diaminocyclohexane, bis(4-aminocyclohexyl)methane, poly(oxypropylene)diamine,1,2-diaminobenzene, 1,3-diaminobenzene, 1,4-diaminobenzene, meta-xylene diamine 4,4'-diaminodiphenylmethane, 4,4'-diaminodiphenylsulfone, 2,2'-diaminodiphenylsulfone, 4,4'-diaminodiphenyl oxide, 3,3',5,5'-tetramethyl-4,4'-diaminodiphenyl, 3,3'-dimethyl-4,4'-diaminodiphenyl, 4,4'-diamino-alpha-methylstilbene, 4,4'-diaminobenzanilide, 4,4'-diaminostilbene, 1,4-bis(4-aminophenyl)-trans-cyclohexane, 1,1-bis(4-aminophenyl)cyclohexane, tris(aminophenyl)methane, 1,4-cyclohexanediamine, 1,6-hexanediamine, piperazine, 1-(2-aminoethyl)piperazine, bis(2-(piperazin-1-yl)ethyl amine, bis(aminopropyl)ether, bis(aminopropyl)sulfide, bis(aminomethyl)norbornane, 2,2'-bis(4-aminocyclohexyl)propane, and a combination thereof.

The reactive compound can comprise a primary monoamine. Examples of monoamines include aniline, 4-chloroaniline, 4-methylaniline, 4-methoxyaniline, 4-cyanoaniline, 2,6-dimethylaniline, 4-aminodiphenyl oxide, 4-aminodiphenylmethane, 4-aminodiphenylsulfide, 4-aminobenzophenone, 4-aminodiphenyl, 4-aminostilbene, 4-amino-alpha-methylstilbene, methylamine, 4-amino-4'-nitrostilbene, n-hexylamine, cyclohexylamine, aminonorbornane, ethanolamine, and a combination thereof. In some embodiments, the reactive compound comprises a di- or polyamine, a primary monoamine, or a combination thereof.

The reaction of a stoichiometric excess of primary monoamine with the diglycidyl ether, for example cis- and

trans-2,2,4,4-tetramethylcyclobutane-1,3-diglycidyl ether, produces an epoxy resin adduct which is substantially difunctional, i.e. has a functionality of about 2. The adduct has two secondary amine groups, which are reactive with epoxy groups. This difunctional adduct can be used as a chain extender for epoxy resins. Upon subsequent reaction with an epoxy resin, the difunctional adduct provides linear chain extension to the epoxy resin instead of crosslinking it. Other classes of reactive compounds, such as secondary diamines, can also be used to form difunctional adducts which can be used as chain extenders for epoxy resins. Linear chain extension provided by the difunctional adduct can impart toughness to cured epoxy resins. In addition, the adduct can be crosslinked with a different epoxy resin adduct, a curing agent, or a combination thereof. The adduct can be reacted separately with an epoxy resin before crosslinking with the different adduct, curing agent, or combination thereof. Alternatively, the adduct and the different adduct, curing agent, or combination thereof can be reacted simultaneously with an epoxy resin to simultaneously chain extend and crosslink the epoxy resin. For example, a secondary diamine epoxy resin adduct prepared by reaction of from cis- and trans-2,2,4,4-tetramethylcyclobutane-1,3-diglycidyl ether with a stoichiometric excess of primary monoamine can be reacted with an epoxy resin to chain extend the epoxy resin. The remaining epoxide groups in the chain-extended epoxy resin can then be reacted with a curing agent having more than two reactive functional groups per molecule, e.g. a polyamine, to crosslink the epoxy resin. The chain extension and crosslinking reactions can be done separately or simultaneously.

When monoglycidyl ethers of 2,2,4,4-tetramethylcyclobutane-1,3-diol are present as impurities with 2,2,4,4-tetramethylcyclobutane-1,3-diglycidyl ether, the component of the epoxy resin adduct formed by reaction of the monoglycidyl ether with a stoichiometric excess of a difunctional reactive compound, for example a primary monoamine or a secondary diamine, can be substantially monofunctional in terms of reactive functional groups. The monofunctional epoxy resin adduct functions as a chain terminator in chain extension or curing reactions with epoxy resins.

The reactive compound can comprise ammonia. The ammonia can be in the form of liquefied ammonia ($NH_3$) or ammonium hydroxide ($NH_4OH$).

The reactive compound can comprise a sulfonamide. Examples of sulfonamides include phenylsulfonamide, 4-methoxyphenylsulfonamide, 4-chlorophenylsulfonamide, 4-bromophenylsulfonamide, 4-methylsulfonamide, 4-cyanosulfonamide, 2,6-dimethyphenylsulfonamide, 4-sulfonamidodiphenyl oxide, 4-sulfonamidodiphenylmethane, 4-sulfonamidobenzophenone, 4-sulfonylamidodiphenyl, 4-sulfonamidostilbene, 4-sulfonamido-alpha-methylstilbene, and a combination thereof.

The reactive compound can comprise an aminophenol. Examples aminophenols include o-aminophenol, m-aminophenol, p-aminophenol, 2-methoxy-4-hydroxyaniline, 3,5-dimethyl-4-hydroxyaniline, 3-cyclohexyl-4-hydroxyaniline, 2,6-dibromo-4-hydroxyaniline, 5-butyl-4-hydroxyaniline, 3-phenyl-4-hydroxyaniline, 4-(1-(3-aminophenyl)-1-methylethyl)phenol, 4-(1-(4-aminophenyl)ethyl)phenol, 4-(4-aminophenoxy)phenol, 4-((4-aminophenyl)thio)phenol, (4-aminophenyl)(4-hydroxyphenyl)methanone, 4-((4-aminophenyl)sulfonyl)phenol, 4-(1-(4-amino-3,5-dibromophenyl)-1-methylethyl)-2,6-dibromophenol, N-methyl-p-aminophenol, 4-amino-4'-hydroxy-alpha-methylstilbene, 4-hydroxy-4'-amino-alpha-methylstilbene, and a combination thereof.

The reactive compound can comprise an aminocarboxylic acid. Examples of aminocarboxylic acids include 2-aminobenzoic acid, 3-aminobenzoic acid, 4-aminobenzoic acid, 2-methoxy-4-aminobenzoic acid, 3,5-dimethyl-4-aminobenzoic acid, 3-cyclohexyl-4-aminobenzoic acid, 2,6-dibromo-4-aminobenzoic acid, 5-butyl-4-aminobenzoic acid, 3-phenyl-4-aminobenzoic acid, 4-(1-(3-aminophenyl)-1-methylethyl)benzoic acid, 4-(1-(4-aminophenyl)ethyl)benzoic acid, 4-(4-aminophenoxy)benzoic acid, 4-((4-aminophenyl)thio)benzoic acid, (4-aminophenyl)(4-carboxyphenyl)methanone, 4-((4-aminophenyl)sulfonyl)benzoic acid, 4-(1-(4-amino-3,5-dibromophenyl)-1-methylethyl)-2,6-dibromobenzoic acid, N-methyl-4-aminobenzoic acid, 4-amino-4'-carboxy-alpha-methylstilbene, 4-carboxy-4'-amino-alpha-methylstilbene, glycine, N-methylglycine, 4-aminocyclohexanecarboxylic acid, 4-aminohexanoic acid, 4-piperidinecarboxylic acid, 5-aminophthalic acid, and a combination thereof.

The reactive compound can be a phenolic hydroxyl containing carboxylic acid. Examples of phenolic hydroxyl containing carboxylic acids include 2-hydroxybenzoic acid, 3-hydroxybenzoic acid, 4-hydroxybenzoic acid, 2-methoxy-4-hydroxybenzoic acid, 3,5-dimethyl-4-hydroxybenzoic acid, 3-cyclohexyl-4-hydroxybenzoic acid, 2,6-dibromo-4-hydroxybenzoic acid, 5-butyl-4-hydroxybenzoic acid, 3-phenyl-4-hydroxybenzoic acid, 4-(1-(3-hydroxyphenyl)-1-methylethyl)benzoic acid, 4-(1-(4-hydroxyphenyl)ethyl)benzoic acid, 4-(4-hydroxyphenoxy)benzoic acid, 4-((4-hydroxyphenyl)thio)benzoic acid, (4-hydroxyphenyl)(4-carboxyphenyl)methanone, 4-((4-hydroxyphenyl)sulfonyl)benzoic acid, 4-(1-(4-hydroxy-3,5-dibromophenyl)-1-methylethyl)-2,6-dibromobenzoic acid, 4-hydroxy-4'-carboxy-alpha-methylstilbene, 4-carboxy-4'-hydroxy-alpha-methylstilbene, 2-hydroxyphenylacetic acid, 3-hydroxyphenylacetic acid, 4-hydroxyphenylacetic acid, 4-hydroxyphenyl-2-cyclohexanecarboxylic acid, 4-hydroxyphenoxy-2-propanoic acid, and a combination thereof.

The reactive compound can be a sulfanilamide. Examples of sulfanilamides include o-sulfanilamide, m-sulfanilamide, p-sulfanilamide, 2-methoxy-4-aminobenzoic acid, 2,6-dimethyl-4-sulfonamido-1-aminobenzene, 3-methyl-4-sulfonamido- 1-aminobenzene, 5-methyl-3-sulfonamido-1-aminobenzene, 3-phenyl-4-sulfonamido-1-aminobenzene, 4-(1-(3-sulfonamidophenyl)-1-methylethyl)aniline, 4-(1-(4-sulfonamidophenyl)ethyl)aniline, 4-(4-sulfonamidophenoxy)aniline, 4-((4-sulfonamidophenyl)thio)aniline, (4-sulfonamidophenyl)(4-aminophenyl)methanone, 4-((4-sulfonamidophenyl)sulfonyl)aniline, 4-(1-(4-sulfonamido-3,5-dibromophenyl)-1-methylethyl)-2,6-dibromoaniline, 4-sulfonamido-1-N-methylaminobenzene, 4-amino-4'-sulfonamido-alpha-methylstilbene, 4-sulfonamido-4'-amino-alpha-methylstilbene, and a combination thereof.

A method of making the epoxy resin adduct comprises reacting the epoxy resin comprising the diglycidyl ether of Formula 1

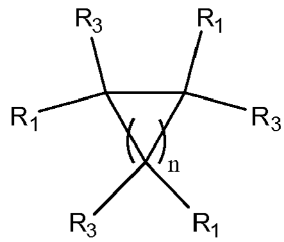 1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups, with at least one reactive compound having two or more active hydrogen atoms per molecule, wherein the active hydrogen atoms are reactive with epoxide groups.

The ratio of equivalents of active hydrogen atoms in the reactive compound to equivalents of epoxide groups in the epoxy resin can be from 2:1, 3:1, 4:1, 5:1, 10:1, or 20:1 to 100:1, 200:1, 300:1, 400:1, or 500:1. In some embodiments the ratio is of equivalents of active hydrogen atoms to equivalents of epoxide groups is 2:1 to 500:1, specifically, 5:1 to 400:1, more specifically 10:1 to 200:1, and still more specifically, 20:1 to 100:1. In a specific embodiment, the ratio is of equivalents of active hydrogen atoms to equivalents of epoxide groups is 4:1 to 15:1.

A catalyst can optionally be use to make the epoxy resin adduct. Examples of catalysts include phosphines, quaternary ammonium salts, phosphonium salts, tertiary amines, and a combination thereof. Any of the phase transfer catalysts for making the epoxy resin described above can be used to make the epoxy resin adduct. The amount of catalyst used, if any, depends upon the particular epoxy resin and reactive compound used to make the epoxy resin adduct, and on the type of catalyst employed. In general, the catalyst can be used in an amount of 0.01 to 1.5 weight %, specifically 0.03 to 0.75 weight %, based on the total weight of the epoxy resin and the reactive compound.

One or more solvents can be used to make the epoxy resin adduct. The presence of a solvent or solvents can improve the miscibility of the reactants, or, if a reactant is a solid, can serve to dissolve it for easy mixing with the other reactants. The solvent can also serve to dilute the reactants, which is advantageous for reducing the amount of oligomers formed. Dilution of the reactants also aids in dissipation of heat generated by the reaction through evaporative cooling. The solvent can be removed at the completion of the reaction using conventional means, such as, for example, vacuum distillation. Alternatively, the solvent can be left in the epoxy resin adduct to provide a solvent-borne epoxy resin adduct which can be used later, for example, in the preparation of coating or film.

The solvent can be any solvent which is substantially unreactive with the epoxy resin, the reactive compound, intermediate products, if any, and the epoxy resin adduct. Examples of useful solvents include aliphatic, cycloaliphatic, and aromatic hydrocarbons, halogenated aliphatic and cycloaliphatic hydrocarbons, aliphatic and cycloaliphatic alcohols, aliphatic ethers, glycol ethers, aliphatic nitriles, cyclic ethers, glycol ethers, esters, ketones, amides, sulfoxides, and a combination thereof. Specific examples of solvents include pentane, hexane, octane, cyclohexane, methylcyclohexane, toluene, xylene, methylethylketone, methylisobutylketone, cyclohexanone, N,N-dimethylformamide, dimethylsulfoxide, diethyl ether, tetrahydrofuran, 1,4-dioxane, dichloromethane, chloroform, ethylene dichloride, methyl chloroform, ethylene glycol dimethyl ether, N,N-dimethylacetamide, acetonitrile, isopropanol, 1-butanol, benzyl alcohol, ethylene glycol butyl ether, diethylene glycol butyl ether, ethylene glycol methyl ether, propylene glycol methyl ether, ethylene glycol phenyl ether, and a combination thereof.

The reaction conditions can vary depending upon the types and amounts of reactants, the type and amount of catalyst used, if any, the type and amount of solvent used, if any, and the modes of addition of the reactants employed. For example, the reaction can be conducted at atmospheric (e.g. 760 mm Hg), superatmospheric, or subatmospheric pressures, and at temperature of 0 °C to 260 °C, specifically 20 °C to 200 °C, and more specifically 35 °C to 160 °C. The time required to complete the reaction depends upon the temperature employed. The higher the reaction temperature, the shorter the time required for completion of the reaction, and vice versa. In general, the reaction time is 5 minutes to one week, specifically 30 minutes to 72 hours, and more specifically 60 minutes to 48 hours.

The time and temperature of the reaction can have significant impact on the distribution of components of the epoxy resin adduct. For example, with higher reaction temperature, longer reaction time, and when the reactive compound has only two active hydrogen atoms per molecule, the formation of oligomeric components is favored. When the reactive compound has more than two active hydrogen atoms per molecule, more branched components are formed.

The epoxy resin can be mixed directly with the reactive compound, added to the reactive compound in incremental steps, or added to the reactive compound continuously. In addition, one or more solvents can be added to the epoxy resin and/or the reactive compound before mixing with the reactive compound. When the epoxy resin is added to the reactive material in increments, all or a part of an added increment can be allowed to react prior to addition of the next increment. The incremental addition of the epoxy resin to an excess amount of the reactive compound generally favors the formation of epoxy resin adduct having a lesser amount of oligomeric components, or free of oligomeric components. For example, when cis-and trans-2,2,4,4-tetramethylcyclobutane-1,3-diglycidyl ether is added incrementally to a stoichiometric excess cyclohexylamine, the cyclohexylamine is in a large stoichiometric excess after each incremental addition of epoxy resin so that substantially all of the epoxide groups of the epoxy resin are reacted with the primary amine group of the cyclohexylamine. These reaction conditions disfavor the formation of oligomers. As discussed above, the ratio of equivalents of active hydrogen atoms in the reactive compound to equivalents of epoxide groups in the epoxy resin can be 2:1 to 500:1. Since the reactive compound, in this case cyclohexylamine, is used in excess, the resulting epoxy resin adduct can comprise a high concentration of unreacted cyclohexylamine. Post-reaction purification of the epoxy resin adduct, such as vacuum distillation, can be employed to strip out all or a part of the unreacted cyclohexylamine.

The distribution of components of the epoxy resin adduct can be modified by any number of conventional methods, such as, for example, recrystallization, chromatographic separation, solvent extraction, zone refining, crystal refining, simple distillation, falling film distillation, wiped film distillation, selective chemical derivatization and removal of one or more components of the adduct, and a combination thereof.

The reaction of the epoxy resin and the reactive compound to form the epoxy resin adduct involves an epoxide ring opening reaction. In the ring opening reaction, the epoxide groups react with the reactive hydrogen atoms to form 2-hydroxylpropyl linkages between the epoxy resin and the reactive compound, with the hydroxyl group of the linkage derived from the epoxide group of the epoxy resin.

The reactive compound can have two different reactive functional groups, each bearing at least one active hydrogen atom. Examples of reactive compounds having two different reactive functional groups include aminophenols, aminocarboxylic acids, phenolic hydroxyl containing carboxylic acids, and sulfanilamides. These compounds can be utilized to provide epoxy resin adducts with different functional groups of different reactivity for curing an epoxy resin. An example of this type of adduct is a reaction product of an aminophenol, p-N-methylaminomethylphenol and cis- and trans-2,2,4,4-tetramethylcyclobutane-1,3-diglycidyl ether. The epoxy resin adduct has terminal phenolic hydroxyl groups when the reaction is conducted under mild conditions including no catalyst, at low temperature (e.g. 25 °C to 50 °C), for a relatively long reaction time, using incremental or slow continuous addition of the cis- and trans-2,2,4,4-tetramethylcyclobutane-1,3-diglycidyl ether to a large stoichiometric excess of the reactive compound, and when both the cis- and trans-2,2,4,4-tetramethylcyclobutane-1,3-diglycidyl ether and the reactive compound are dissolved in solvent. A catalyst can favor reaction of one functional group over another with the epoxide group. For example, when a reactive compound comprising at least two different reactive functional groups, each bearing at least one active hydrogen atom, is used to form the adduct, a catalyst which favors reaction of one type of functional group with an epoxide group over reaction of the other type of functional group with an epoxide group, can be employed.

The epoxy resin adduct can comprise at least one oligomeric component derived from reaction of epoxide groups from at least two separate epoxy resin molecules, with each epoxy resin molecule having one of its epoxide groups already reacted with one of the reactive functional groups in the reactive compound.

The epoxy resin adduct can comprise at least one branched or crosslinked component derived from any of the following reactions: (1) reaction between an epoxide group of an epoxy resin molecule having one of its epoxide groups already reacted with one of the reactive functional groups in the reactive compound and the secondary hydroxyl group of a 2-hydroxypropyl linkage of an epoxy resin adduct intermediate; or (2) reaction between three separate epoxy resin molecules with three reactive functional groups of the reactive compound.

In addition, some minor components can be present in the epoxy resin adduct, for example components comprising 1,2-glycol groups derived from hydrolysis of an epoxide group in the epoxy resin or epoxy resin adduct intermediate, or halomethyl groups derived from addition of epihalohydrin to a hydroxyl group of an intermediate halohydrin molecule during the process of forming the epoxy resin adduct. Other minor epoxy resin adduct components can be formed via a reaction of the secondary hydroxyl group of a 2-hydroxypropyl linkage of an epoxy resin adduct intermediate with one of the reactive functional groups of the reactive compound. For example, reaction of a secondary hydroxyl group with the carboxylic acid group of a reactive compound, can result in formation of an ester linkage in the epoxy resin adduct.

A curable epoxy resin composition comprises the epoxy resin adduct and at least one epoxy resin. The curable epoxy resin composition, when cured, provides a cured epoxy resin comprising 3-, 4-, or 5-membered cycloaliphatic rings. In some embodiments, the at least one epoxy resin comprises (a) an oligomeric polyfunctional aliphatic or cycloaliphatic epoxy resin, (b) an epoxy resin other than the oligomeric polyfunctional aliphatic or cycloaliphatic epoxy resin, or (c) a mixture of epoxy resin (a) and epoxy resin (b). All of the above-described variations in the epoxy resin adduct apply as well to the curable epoxy resin composition. For example, the at least one epoxy resin can comprise

cis- and trans-2,2,4,4-tetramethylcyclobutane-1,3-diglycidyl ether.

The at least one epoxy resin of the curable epoxy resin composition can be any epoxide-containing compound which has an average of more than one epoxide group per molecule. The epoxide group can be a glycidyl group of formula 5

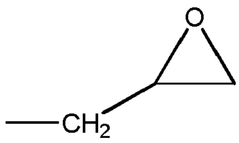

5.

The glycidyl group can be bonded to a oxygen, sulfur, or nitrogen atom, or to the single bonded oxygen atom of a-CO-O- group. The oxygen, sulfur, or nitrogen atom, or the carbon atom of the -CO-O- group can be bonded to an aliphatic, cycloaliphatic, polycycloaliphatic, or aromatic hydrocarbon group. The aliphatic, cycloaliphatic, polycycloaliphatic, or aromatic hydrocarbon group can be substituted with non-reactive substituents including halogen atoms, specifically fluorine, bromine or chlorine, or nitro groups. Alternatively, the glycidyl groups can be attached to the terminal carbon atoms of a compound containing an average of more than one $-(O\text{-}CHR^a\text{-}CHR^a)_t-$ group, wherein each $R^a$ is independently a hydrogen atom or an alkyl or haloalkyl group containing from one to two carbon atoms, with the proviso that only one $R^a$ group can be a haloalkyl group, and t has a value from 1 to 100, specifically 1 to 20, more specifically 1 to about 10, and still more specifically 1 to 5.

Specific examples of epoxy resins of the curable epoxy resin composition comprise diglycidyl ethers of 1,2-dihydroxybenzene (catechol), 1,3-dihydroxybenzene (resorcinol), 1,4-dihydroxybenzene (hydroquinone), 4,4'-isopropylidenediphenol (bisphenol A), 4,4'-dihydroxydiphenylmethane (bisphenol F), 3,3',5,5'-tetrabromobisphenol A, 4,4'-thiodiphenol, 4,4'-sulfonyldiphenol, 2,2'-sulfonyldiphenol, 4,4'-dihydroxydiphenyl oxide, 4,4'-dihydroxybenzophenone, 1,1'-bis(4-hydroxyphenyl)-1-phenylethane, 3,3'-5,5'-tetrachlorobisphenol A, 3,3'-dimethoxybisphenol A, 4,4'-dihydroxybiphenyl, 4,4'-dihydroxy-alpha-methylstilbene, 4,4'-dihydroxybenzanilide, 4,4'-dihydroxystilbene, 4,4'-dihydroxy-alpha-cyanostilbene, N,N'-bis(4-hydroxyphenyl)terephthalamide, 4,4'-dihydroxyazobenzene, 4,4'-dihydroxy-2,2'-dimethylazoxybenzene, 4,4'-dihydroxydiphenylacetylene, 4,4'-dihydroxychalcone, 4-hydroxyphenyl-4-hydroxybenzoate, dipropylene glycol, poly(propylene glycol), and thiodiglycol; the triglycidyl ether of tris(hydroxyphenyl)methane; the polyglycidyl ethers of a alkyl or halogen substituted phenol-formaldehyde resin (epoxy novolac resins); the tetraglycidyl amines of 4,4'-diaminodiphenylmethane, 4,4'-diaminostilbene, N,N'-dimethyl-4,4'-diaminostilbene, 4,4'-diaminobenzanilide, and 4,4'-diaminobiphenyl; the polyglycidyl ether of the condensation product of a dicyclopentadiene or an oligomer thereof and a phenol or alkyl- or halogen-substituted phenol; and a combination thereof.

The at least one epoxy resin of the curable epoxy resin composition can also be an advanced epoxy resin. The advanced epoxy resin can be a product of an advancement reaction of an epoxy resin with an aromatic diol or a dicarboxylic acid. The epoxy resin used to form the advanced epoxy resin can include the epoxy resin adduct, any one or more components of the epoxy resin adduct, or any one or more components of the curable epoxy resin composition.

The curable epoxy resin composition can be prepared by mixing the epoxy resin adduct with the at least one epoxy resin in relative amounts which will effectively cure the curable epoxy resin composition. The ratio of equivalents of active hydrogen atoms in the epoxy resin adduct to equivalents of epoxide groups in the at least one epoxy resin can be 0.60:1 1 to 1.50:1, and specifically 0.95:1 to 1.05:1.

The curable epoxy resin composition can further comprise a curing agent and/or a curing catalyst. Examples of curing agents useful for the curable epoxy resin composition include aliphatic, cycloaliphatic, polycycloaliphatic, or aromatic primary monoamines, aliphatic, cycloaliphatic, polycycloaliphatic, or aromatic primary and secondary polyamines, carboxylic acids and anhydrides thereof, aromatic hydroxyl-containing compounds, imidazoles, guanidines, urea-formaldehyde resins, melamine-formaldehyde resins, alkoxylated urea-formaldehyde resins, alkoxylated melamine-formaldehyde resins, amidoamines, polyamides, Mannich bases, other epoxy resin adducts, and a combination thereof.

Specific examples of curing agents include methylenedianiline, 4,4'-diaminostilbene, 4,4'-diamino-alpha-methylstilbene, 4,4'-diaminobenzanilide, dicyandiamide, ethylenediamine, diethylenetriamine, triethylenetetramine, tetraethylenepentamine, urea-formaldehyde resins, melamine-formaldehyde resins, methylolated urea-formaldehyde resins, methylolated melamine-formaldehyde resins, phenol-formaldehyde novolac resins, cresolformaldehyde novolac resins, sulfanilamide, diaminodiphenylsulfone, diethyltoluenediamine, t-butyltoluenediamine, bis-4-aminocyclohexylamine, isophoronediamine, diaminocyclohexane, hexamethylenediamine, piperazine, 1-(2-aminoethyl)piperazine, 2,5-dimethyl-2,5-hexanediamine, 1,12-dodecanediamine, tris-3-aminopropylamine, and a combination thereof.

The curing agent can be employed in combination with the epoxy resin adduct to cure the curable epoxy resin composition. The ratio of equivalents of reactive hydrogen atoms in the epoxy resin adduct and the curing agent combined to equivalents of epoxide groups in the at least one epoxy resin can be 0.60:1 to 1.50:1, and specifically 0.95:1 to 1.05:1.

Examples of curing catalysts include boron trifluoride, boron trifluoride etherate, aluminum chloride, ferric chloride, zinc chloride, silicon tetrachloride, stannic chloride, titanium tetrachloride, antimony trichloride, boron trifluoride monoethanolamine complex, boron trifluoride triethanolamine complex, boron trifluoride piperidine complex, pyridine-borane complex, diethanolamine borate, zinc fluoroborate, metallic acylates such as stannous octoate or zinc octoate, and a combination thereof.

The curing catalyst can be used in an amount which will effectively cure the curable epoxy resin composition. The amount of the curing catalyst necessary to effectively cure the curable epoxy resin composition can depend upon the particular epoxy resin adduct, epoxy resin, and curing agent, if any, used in the curable epoxy resin composition. The amount of curing catalyst can be 0.001 to 2 weight %, based on the total weight of the curable epoxy resin composition.

The curable epoxy resin composition can optionally comprise at least one additive selected from a cure accelerator, a solvent or diluent, a rheology modifier such as a flow modifier and/or a thickener, a reinforcing agent, a filler, a pigment, a dye, a mold release agent, a wetting agent, a stabilizer, a fire retardant agent, a surfactant, or a combination thereof The additive can be added in an amount necessary to achieve the desired effect. For example, the pigment and/or dye can be added in an amount which will provide the composition with the desired color. In general, the amount of the additive can be 0 to 20 weight %, specifically 0.5 to 5 weight %, and more specifically 0.5 to 3 weight %, based upon the total weight of the curable epoxy resin composition.

The curable composition can optionally comprise a cure accelerator. Examples of cure accelerators include, for example, mono-, di-, tri- and tetra-phenols, chlorinated phenols, aliphatic or cycloaliphatic mono- or di-carboxylic acids, aromatic carboxylic acids, hydroxybenzoic acids, halogenated salicylic acids, boric acid, aromatic sulfonic acids, imidazoles, tertiary amines, aminoalcohols, aminopyridines, aminophenols, mercaptophenols, and a combination thereof. Specific examples of cure accelerators include 2,4-dimethylphenol, 2,6-dimethylphenol, 4-methylphenol, 4-tertiary-butylphenol, 2-chlorophenol, 4-chlorophenol, 2,4-dichlorophenol, 4-nitrophenol, 1,2-dihydroxybenzene, 1,3-dihydroxybenzene, 2,2'-dihydroxybiphenyl, 4,4'-isopropylidenediphenol, valeric acid, oxalic acid, benzoic acid, 2,4-dichlorobenzoic acid, 5-chlorosalicylic acid, salicylic acid, p-toluenesulfonic acid, benzenesulfonic acid, hydroxybenzoic acid, 4-ethyl-2-methylimidazole, 1-methylimidazole, triethylamine, tributylamine, N,N-diethylethanolamine, N,N-dimethylbenzylamine, 2,4,6-tris(dimethylamino)phenol, 4-dimethylaminopyridine, 4-aminophenol, 2-aminophenol, 4-mercaptophenol, and a combination thereof.

The curable composition can optionally comprise a solvent or diluent. Examples of solvent or diluent include, for example, aliphatic and aromatic hydrocarbons, halogenated aliphatic hydrocarbons, aliphatic ethers, aliphatic nitriles, cyclic ethers, alcohols, glycol ethers, esters, ketones, amides, sulfoxides, and a combination thereof. Specific solvents include pentane, hexane, octane, toluene, xylene, methylethylketone, methylisobutylketone, N,N-dimethylformamide, dimethylsulfoxide, diethyl ether, tetrahydrofuran, 1,4-dioxane, dichloromethane, chloroform, ethylene dichloride, methyl chloroform, ethylene glycol dimethyl ether, diethylene glycol methyl ether, dipropylene glycol methyl ether, butanol, N-methylpyrrolidinone, N,N-dimethylacetamide, acetonitrile, sulfolane, and a combination thereof.

The curable composition can optionally comprise a rheology modifier such as a thickener or a flow modifier. The amount of rheology modifier can be 0 to 10 weight %, specifically 0.5 to 6 weight %, and more specifically 0.5 to 4 weight %, based on the total weight of the curable epoxy resin composition.

The curable composition can optionally comprise a filler. The amount of filler can be 0 to 95 weight %, specifically 10 to 80 weight %, and more specifically 40 to 60 weight %, based on the total weight of the curable epoxy resin composition.

A method of curing a curable epoxy resin composition comprises reacting the epoxy resin adduct with the at least one epoxy resin. All of the above-described variations in the epoxy resin adduct apply as well to the method of curing the curable epoxy resin composition. The epoxy resin adduct and the at least one epoxy resin can be reacted at atmospheric (e.g. 760 mm Hg), superatmospheric, or subatmospheric pressures, and at a temperature of 0 °C to 300 °C, specifically 25 °C to 250 °C, and more specifically 50 °C to 200 °C. The time required to cure the curable composition depends upon the temperature employed. The higher the cure temperature, the shorter the time required for completion of the reaction, and vice versa. In general, the cure time is 1 minutes to 48 hours, specifically 5 minutes to 24 hours, and more specifically 30 minutes to 12 hours.

A B-staged epoxy resin can be made by partially curing the curable epoxy resin comprising the epoxy resin adduct and the at least one epoxy resin. Thus, a method of B-staging an epoxy resin comprises partially curing the curable epoxy resin composition comprising the epoxy resin adduct and the at least one epoxy resin. All of the above-described variations in the curable epoxy resin composition, including variations in the epoxy resin adduct and the at least one epoxy resin, apply as well to the B-staged epoxy resin. The B-staged epoxy resin can be cured further in a subsequent step.

A cured epoxy resin comprises a reaction product of the epoxy resin adduct and at least one epoxy resin. All of the above-described variations in the curable advanced epoxy resin composition, including variations in the epoxy resin adduct and the at least one epoxy resin, apply as well to the cured epoxy resin composition. The cured epoxy resin composition can be in the form of a coating, an adhesive, a film, a solid, or a foam, and can be, for example, a laminate,

a composite, an encapsulant, or an electronic device. The process to form the cured epoxy resin can be, for example, gravity casting, vacuum casting, automatic pressure gelation (APG), vacuum pressure gelation (VPG), infusion, filament winding, lay up injection, transfer molding, prepreging, and coating, such as roller coating, dip coating, spray coating and brush coating.

Articles can be made from the curable epoxy resin composition. The article can be a coating, an electrical or structural laminate, an electrical or structural composite, a filament winding, a molding, a casting, a potting, or an encapsulation.

The following examples further illustrate the present invention in detail but are not to be construed to limit the scope thereof.

EXAMPLES

Standard abbreviations and trade names used in the detailed description, including the examples and comparative examples, are defined in Table 1.

Table 1

| Analytical | |
|---|---|
| AHEW | Amine hydrogen equivalent weight |
| cc | Cubic centimeters |
| cP | Centipoise |
| DI | Deionized |
| DSC | Differential scanning calorimetry |
| EEW | Epoxide equivalent weight (grams of resin / epoxide equivalent) |
| eq | Equivalent(s) |
| g | Gram(s) |
| GC | Gas chromatograph(ic) |
| hr | Hour(s) |
| Hz | Hertz |
| in | Inch(es) |
| J | Joule(s) |
| L | Liter(s) |
| LPM | Liter(s) per minute |
| m | Meter(s) |
| meq | Milliequivalent(s) |
| min | Minutes |
| mL | Milliliter(s) |
| mm | Millimeter(s) |
| MS | Mass spectrometry, mass spectrometric |
| sec | Seconds |
| Tg | Glass transition temperature |
| wt | Weight |
| w/v | Weight by volume |
| μm | Micrometer(s) |
| °C | Degrees Celsius |

(continued)

| Materials | |
|---|---|
| DETA | Diethylenetriamine |
| CHDM | Isomeric cyclohexanedimethanols |
| CHDM MGE | Monoglycidyl ether of isomeric cyclohexanedimethanols |
| CHDM DGE | Diglycidyl ether of isomeric cyclohexanedimethanols |
| PTFE | Polytetrafluoroethylene |
| TMCBD | cis- and trans-2,2,4,4-tetramethylcyclobutane-1,3-diol |
| TMCBD MGE | Monoglycidyl ether of cis- and trans-2,2,4,4-tetramethylcyclobutane-1,3-diol |
| TMCBD DGE | Diglycidyl ether of cis- and trans-2,2,4,4-tetramethylcyclobutane-1,3-diol |

In the following examples and comparative examples, standard analytical equipment and methods were used as described below:

Gas Chromatographic (GC) Analysis

In the general method, a Hewlett Packard 5890 Series II Plus gas chromatograph was employed using a DB-1 capillary column (61.4 m by 0.25 mm with a 0.25 μm film thickness, Agilent). The column was maintained in the chromatograph oven at a 50 °C initial temperature. Both the injector inlet and flame ionization detector were maintained at 300 °C. Helium carrier gas flow through the column was maintained at 1.1 mL/min. For the analyses of the epoxy resins during synthesis, from rotary evaporation and from distillation, an initial oven temperature of 50 °C, with heating at 12 °C/min to a final oven temperature of 300 °C, was employed. Under these conditions, all of the components were eluted within the 50 min total time given for the analysis. The GC results for each component are expressed in area %, wherein area % refers to the peak area for the given component divided by the total peak area and multiplied by 100.

Samples for GC analysis during synthesis were prepared by collection of a 0.5 mL aliquot of the slurry product from the epoxidation reaction and addition to a vial containing 1 mL of acetonitrile. After shaking to mix, a portion of the slurry in acetonitrile was loaded into a 1 mL syringe (Norm-Ject, all polypropylene / polyethylene, Henke Sass Wolf GmBH) and passed through a syringe filter (Acrodisc CR 13 with 0.2 μm PTFE membrane, Pall Corporation, Gelman Laboratories) to remove any insoluble debris.

I.C.I. Cone and Plate Viscosity

Viscosity was determined on an I.C.I. Cone and Plate Viscometer Viscosity (model VR-4540) at 25 °C. In the method, the viscometer equipped with a 0-40 poise spindle (model VR-4140) and equilibrated to 25 °C was calibrated to zero then the sample applied and held 2 min with viscosity then checked and the reading taken after 15 seconds. Five to six duplicate viscosity tests were completed using a fresh aliquot of the particular product being tested. The individual measurements were averaged.

Percent Epoxide/Epoxide Equivalent Weight (EEW) Analysis

A modification of the standard titration method, that of Jay, R.R., "Direct Titration of Epoxy Compounds and Aziridines", Analytical Chemistry, 36, 3, 667-668 (March, 1964), was used to determine percent epoxide in the various epoxy resins. In the present adaptation of this method, the weighed sample (sample weight ranges from 0.15-0.20 g, a scale with 4 decimal place accuracy was used) was dissolved in dichloromethane (15 mL) followed by the addition of tetraethylammonium bromide solution in acetic acid (15 mL). The resultant solution treated with 3 drops of crystal violet indicator (0.1 % w/v) in acetic acid) was titrated with 0.1 Normal (N) perchloric acid in acetic acid on a Metrohm 665 Dosimat titrator (Brinkmann). Titration of a blank consisting of dichloromethane (15 mL) and tetraethylammonium bromide solution in acetic acid (15 mL) provided correction for any solvent background. Percent epoxide and EEW were calculated using the following equations:

$$\%\ \text{Epoxide} = \frac{[(\text{mL titrated sample}) - (\text{mL titrated blank})]\ (0.4303)}{(\text{g sample titrated})}$$

$$EEW = 4303 / (\% \text{ epoxide})$$

Differential Scanning Calorimetry (DSC)

For analysis (1) of curing of the thermosettable blends of a DGE with a curing agent and (2) of the $T_g$ of a cured sample, a DSC 2910 Modulated DSC (TA Instruments) was employed. A heating rate of 7 °C/min from 0 °C to 250 °C or 300 °C was used under a stream of nitrogen flowing at 35 cc/min. Each sample analyzed for curing was contained in an aluminum pan and loosely covered (not sealed) with an aluminum lid. Each cured sample for analysis of $T_g$ was contained in an open aluminum pan. The respective sample weight tested is given with the results obtained.

Preparative Example 1: Synthesis of Epoxy Resin and Diglycidyl Ether of cis- and trans-2,2,4,4-tetramethylcyclobutane-1,3-diol (TMCBD)

Epoxidation of TMCBD was performed using four stages of aqueous sodium hydroxide addition to give TMCBD epoxy resin. TMCBD DGE was isolated by fractional vacuum distillation.

A. Epoxidation of TMCBD

Stage 1

A 5 L, 4 neck, glass, round bottom reactor was charged with TMCBD (432.63 g, 3.0 mol, 6.0 hydroxyl eq), epichlorohydrin (1110.24 g, 12.0 mol, 2:1 epichlorohydrin:TMCBD hydroxyl eq ratio), toluene (1.5 L), and benzyltriethylammonium chloride (43.62 g, 0.192 mole) in the indicated order. The TMCBD was a commercial grade product from Eastman Chemical. GC analysis of an aliquot of the TMCBD after normalization to remove solvent (acetonitrile) revealed the presence of the two isomeric components at 45.3 and 54.7 area %. The reactor was additionally equipped with a condenser (maintained at 0 °C), a thermometer, a Claisen adaptor, an overhead nitrogen inlet (1 LPM $N_2$ used), and a stirrer assembly (PTFE paddle, glass shaft, variable speed motor). A controller monitored the temperature registered on the thermometer in the reactor and provided heating via the heating mantle placed under the reactor as well as cooling delivered by a pair of fans positioned on the reactor exterior. Sodium hydroxide (360.0 g, 9.0 moles) dissolved in DI water (360 g) for the initial addition was added to a side arm vented addition funnel, sealed with a ground glass stopper, then attached to the reactor. Stirring commenced to give a 23 °C mixture followed by commencement of drop wise addition of the aqueous sodium hydroxide solution. The reaction mixture was allowed to self-heat during the aqueous sodium hydroxide addition time. After 217 min, 68.75 % of the aqueous sodium hydroxide was added causing the reaction temperature to reach a maximum of 30 °C and then remain at that temperature for the next 30 min. Addition of the aqueous sodium hydroxide required a total of 270 minutes. The reaction temperature had declined to 29 °C at the end of the aqueous sodium hydroxide addition and the product was a cloudy biphasic mixture additionally containing precipitated solids. After 14.57 hr of post reaction, the temperature had declined to 26 °C and a sample was removed for GC analysis. GC analysis after normalization to remove solvents (acetonitrile and toluene) and unreacted epichlorohydrin revealed the presence of 7.99 area % light components, 9.63 area % unreacted TMCBD; 21.86 area % monoglycidyl ethers, 0.18 area % of a pair of components associated with the diglycidyl ether peaks, 54.53 area % diglycidyl ethers, and 5.81 area % oligomers that were volatile under the conditions of the GC analysis. (The sample for GC analysis was inhomogeneous with respect to precipitated TMCBD reactant present in the reaction mixture and thus understates the amount of this reactant.) After a cumulative 14.72 hr of post reaction, DI water (1 L) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 80.43 g of damp, white crystalline solid was recovered on the fritted glass funnel. GC analysis of an aliquot of the solid revealed it to be unreacted TMCBD.

Stage 2

The combined organic layer and unreacted TMCBD from Stage 1 were reloaded into the reactor along with fresh benzyltriethylammonium chloride (21.81 g, 0.1915 mol). Sodium hydroxide (180 g, 4.5 mol) dissolved in DI water (180 g) was added to a side arm vented addition funnel, sealed with a ground glass stopper, then attached to the reactor. Stirring commenced to give a 25 °C mixture followed by commencement of drop wise addition of the aqueous sodium

hydroxide solution. The reaction mixture was allowed to self-heat during the aqueous sodium hydroxide addition time. Thus, after 90 min, 75.0 % of the aqueous sodium hydroxide was added causing the reaction temperature to reach a maximum of 30 °C. Addition of the aqueous sodium hydroxide required a total of 115 minutes. The reaction temperature had declined to 28.5 °C at the end of the aqueous sodium hydroxide addition and the product was a cloudy biphasic mixture additionally containing precipitated solids. After 16.17 hr of postreaction the temperature had declined to 26 °C and a sample was removed for GC analysis. GC analysis after normalization to remove solvents (acetonitrile and toluene) and unreacted epichlorohydrin revealed the presence of 6.46 area % light components, 3.77 area % unreacted TMCBD; 12.16 area % monoglycidyl ethers, 0.19 area % of a pair of components associated with the diglycidyl ether peaks, 69.09 area % diglycidyl ethers, and 8.33 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 16.33 hr of postreaction, DI water (455 mL) was added to the stirred reactor causing an exotherm to 27.5 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 30.17 g of damp, white crystalline solid was recovered on the fritted glass funnel. GC analysis of an aliquot of the solid revealed it to be unreacted TMCBD.

Stage 3

The combined organic layer and unreacted TMCBD from Stage 2 were reloaded into the reactor along with fresh benzyltriethylammonium chloride (10.91 g, 0.0479 mole). Sodium hydroxide (90 g, 2.25 mol) dissolved in DI water (90 g) was added to a side arm vented addition funnel, sealed with a ground glass stopper, then attached to the reactor. Stirring commenced to give a 25 °C mixture followed by commencement of drop wise addition of the aqueous sodium hydroxide solution. The reaction mixture was allowed to self-heat during the aqueous sodium hydroxide addition time. Thus, after 13 min, 21.85 % of the aqueous sodium hydroxide was added causing the reaction temperature to reach a maximum of 27 °C and remain at this temperature for the duration of the aqueous sodium hydroxide addition. Addition of the aqueous sodium hydroxide required a total of 70 min. The product was a cloudy biphasic mixture additionally containing precipitated solids at the end of the aqueous sodium hydroxide addition. After 16.95 hr of postreaction the temperature had declined to 25 °C and a sample was removed for GC analysis. GC analysis after normalization to remove solvents (acetonitrile and toluene) and unreacted epichlorohydrin revealed the presence of 7.14 area % light components, 3.03 area % unreacted TMCBD; 8.16 area % monoglycidyl ethers, 0.16 area % of a pair of components associated with the diglycidyl ether peaks, 72.41 area % diglycidyl ethers, and 9.10 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 17.00 hr of postreaction, DI water (185 mL) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 8.19 g of damp, white crystalline solid was recovered on the fritted glass funnel. GC analysis of an aliquot of the solid revealed it to be unreacted TMCBD.

Stage 4

The combined organic layer and unreacted TMCBD from Stage 3 were reloaded into the reactor along with fresh benzyltriethylammonium chloride (10.91 g, 0.0479 mole). Sodium hydroxide (90 g, 2.25 moles) dissolved in DI water (90 g) was added to a side arm vented addition funnel, sealed with a ground glass stopper, then attached to the reactor. Stirring commenced to give a 24 °C mixture followed by commencement of drop wise addition of the aqueous sodium hydroxide solution. The reaction mixture was allowed to self-heat during the aqueous sodium hydroxide addition time. Thus, after 35 min, 58.33 % of the aqueous sodium hydroxide was added causing the reaction temperature to reach a maximum of 26 °C and remain at this temperature for the duration of the aqueous sodium hydroxide addition. Addition of the aqueous sodium hydroxide required a total of 67 minutes. The product was a cloudy biphasic mixture at the end of the aqueous sodium hydroxide addition. After 20.63 hr of post reaction the temperature had declined to 25 °C and a sample was removed for GC analysis. GC analysis after normalization to remove solvents (acetonitrile and toluene) and unreacted epichlorohydrin revealed the presence of 7.91 area % light components, 1.19 area % unreacted TMCBD; 4.72 area % monoglycidyl ethers, 0.17 area % of a pair of components associated with the diglycidyl ether peaks, 74.45 area % diglycidyl ethers, and 11.56 area % oligomers that were volatile under the conditions of the GC

analysis. After a cumulative 20.71 hr of postreaction, DI water (185 mL) was added to the stirred reactor causing an exotherm to 27 °C. Stirring ceased after 30 min and the reactor contents were allowed to settle. (Crystalline solid was no longer observed between the organic and aqueous layers.) The organic layer was decanted from the reactor into a pair of 2 L separatory funnel and the aqueous layer remaining in the reactor discarded along with a minor amount of aqueous layer removed from the separatory funnels.

B. Epoxy Resin Isolation

The organic layer equally split between the pair of separatory funnels was washed with DI water (400 mL per separatory funnel) by vigorously shaking. The washed product was allowed to settle for 4 hr, then the aqueous layer was removed and discarded as waste. A second wash was completed using the aforementioned method, with settling overnight (20 hr). The combined, hazy organic solution was vacuum filtered through a bed of anhydrous, granular sodium sulfate in a 600 mL fritted glass funnel providing a transparent filtrate. Toluene was used to wash epoxy resin product entrained in the sodium sulfate into the filtrate.

Rotary evaporation of the filtrate using a maximum oil bath temperature of 65 °C to a final vacuum of 5.6 mm ofHg removed the bulk of the volatiles. A total of 770.66 g of yellow orange, transparent liquid was recovered after completion of the rotary evaporation. GC analysis after normalization to remove solvent (acetonitrile) revealed the presence of 4.69 area % "lights" (2 peaks with retention times between the diol starting reactant and monoglycidyl ether), 4.47 area % monoglycidyl ethers, 0.17 area % of a pair of components associated with the diglycidyl ether peaks, 76.61 area % diglycidyl ethers, and 14.06 area % oligomers that were volatile under the conditions of the GC analysis. GC analysis revealed that essentially all unreacted epichlorohydrin, toluene, and unreacted diol had been removed. The TMCBD epoxy resin had an I.C.I, cone and plate viscosity of 23.3 cP.

C. Fractional Vacuum Distillation

A portion (765.08 g) of the residue from the rotary evaporation in Step B was added to a 1 L, 3 neck, glass, round bottom reactor equipped with magnetic stirring and a thermometer for monitoring the pot temperature. A one piece integral vacuum jacketed Vigreux distillation column with distillation head was attached to a second section of vacuum jacketed Vigreux distillation column through the respective 24/40 joints on both columns. The coupled pair of distillation columns was then attached to the reactor. Each of the distillation columns nominally provided 9 to 18 theoretical plates depending on the mode of operation. The distillation head was equipped with an overhead thermometer, air cooled condenser, a receiver and a vacuum takeoff. A vacuum pump was employed along with a liquid nitrogen trap and an in-line digital thermal conductivity vacuum gauge. Stirring commenced followed by application of full vacuum then progressively increased heating using a thermostatically controlled heating mantle. A clean receiver was used to collect each respective distillation cut. During the distillation, the initial distillation cuts were taken to sequentially remove all components boiling below the monoglycidyl ethers of TMCBD, then the bulk of the monoglycidyl ethers. The final distillation cuts sought to selectively remove the diglycidyl ethers, leaving the oligomeric product (143.38 g) in the distillation pot. GC analysis revealed that the oligomers contained a residual 0.1 area % monoglycidyl ether, 25.3 area % diglycidyl ether, with the balance as the oligomers. After normalization to remove the peaks associated with acetonitrile and the diglycidyl ether, the GC analysis demonstrated the oligomeric components containing multiple isomers as shown in Table 2 where the structures are based on molecular weight data obtained from chemical ionization gas chromatographic-mass spectroscopic analysis.

Table 2

| Component | GC Area % |
|---|---|
| 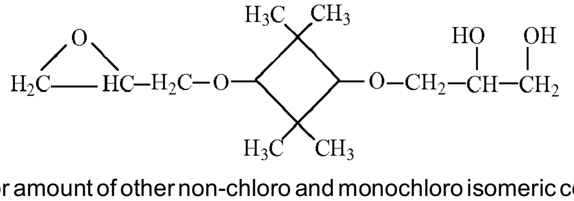 (plus a minor amount of other non-chloro and monochloro isomeric compounds) | 5.48 |

(continued)

| Component | GC Area % |
|---|---|
| 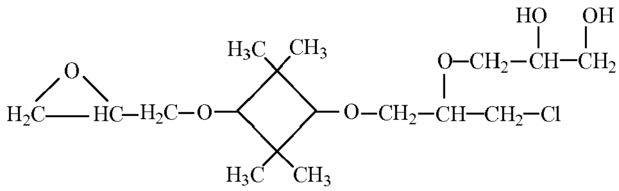<br>and<br>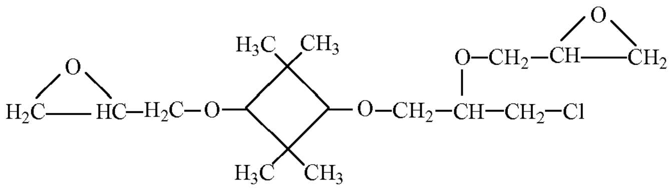<br>and<br>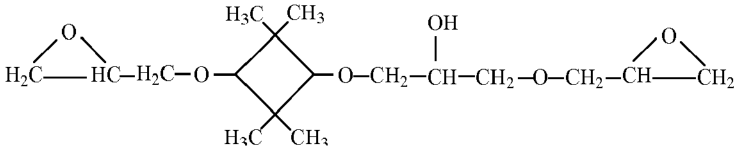<br>(plus a minor amount of other non-chloro isomeric compounds) | 5.59 |
| 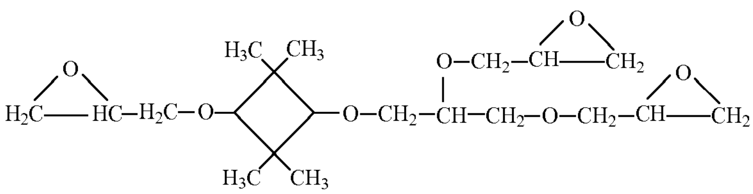<br>(plus a minor amount of monochloro isomeric compounds) | 33.90 |
| 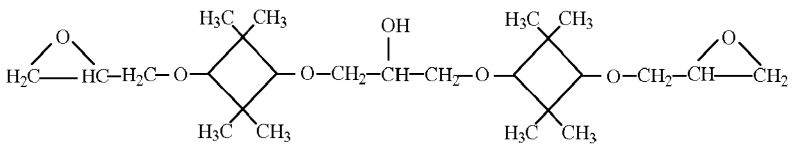 | 12.44 |
| 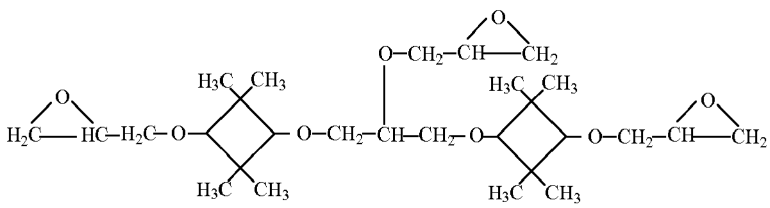 | 42.59 |

A master batch was prepared by combining various distillation cuts to give 448.24 g of TMCBD DGE. GC analysis revealed 99.61 area % diglycidyl ethers of TMCBD and 0.23 area % monoglycidyl ethers of TMCBD, with the balance (0.15 area %) being a minor peak associated with the isomeric diglycidyl ethers. The EEW of the TMCBD DGE was 130.07 as determined by titration. The oxirane oxygen content of the TMCBD DGE was 12.30 weight %, which is 98.56 % of theoretical. The theoretical oxirane oxygen content for 100 % TMCBD DGE is 12.48 %. The I.C.I, cone and plate viscosity of the TMCBD DGE was 14.5 cP. Total chlorine for the TMCBD DGE was 59 ± 2 ppm as determined via neutron activation analysis.

<u>Preparative Example 2: Repeat Synthesis of the Epoxy Resin and Diglycidyl Ether of TMCBD</u>

The procedure of Preparative Example 1 was repeated, including the four-stage epoxidation of TMCBD (A),

epoxy resin isolation (B), and fractional vacuum distillation (C). The resulting epoxy resin contained 99.72 area % diglycidyl ethers of TMCBD and 0.07 area % monoglycidyl ethers of TMCBD, with the balance (0.21 area %) being a minor peak associated with isomeric diglycidyl ethers. The EEW was 129.93, as determined by titration. The oxirane oxygen content was 12.31 %, which is 98.64 % of theoretical. The I.C.I, cone and plate viscosity was 14.5 cP.

Comparative Example 1: Lewis acid-catalyzed Epoxidation cis- and trans-1,4-CHDM

A commercial grade of an epoxy resin of CHDM (ERISYS™ GE-22S, available from CVC Thermoset Specialties, Moorestown, NJ) produced via Lewis acid-catalyzed epoxidation of cis- and trans-1,4-CHDM was analyzed by GC-MS, and the following oligomeric components, i.e. components having a higher retention time in the GC-MS analysis than CHDM DGE, were identified:

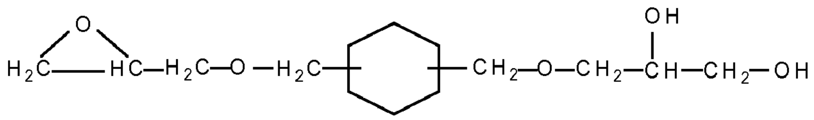 6

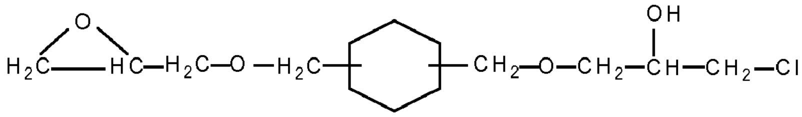 7

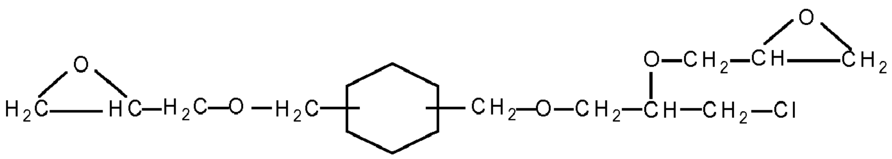 8

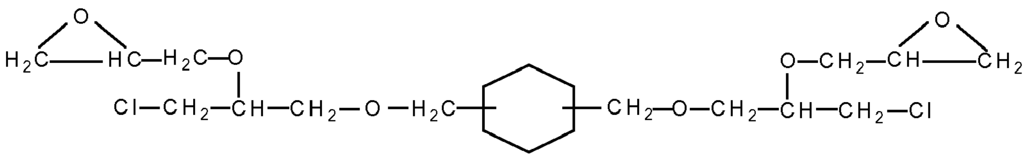 9

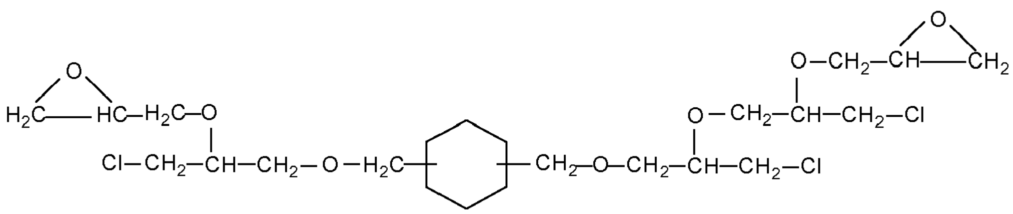 10

The chloromethyl-containing diglycidyl ether of Formula 9 was present in an amount of greater than 80 area %. It is clear from the chemical structures of the components of Formulae 6-10 that the Lewis acid catalyzed epoxidation produces a very different reaction product than that obtained by phase transfer catalyzed epoxidation. None of the components of Formulae 6-10 are found in the epoxy resin from phase transfer catalyzed epoxidation of cyclohexanedimethanols. It is also noted that unlike the epoxy resin obtained by phase transfer catalyzed epoxidation, which contains triglycidyl ethers, the highest glycidyl ether group functionality of the epoxy resin obtained by Lewis acid catalyzed epoxidation is two (diglycidyl ethers).

The Lewis acid catalyzed epoxidation also produced a large amount of by-products containing bound chlorine in the form of chloromethyl groups. Each of the components of Formulae 8-11 have chlorine bound in the form of chloromethyl groups. The presence of the component of Formula 8, a monoglycidyl ether monochlorohydrin, indicates that further treatment with aqueous sodium hydroxide is needed to complete the dehydrochlorination step of the epoxidation. The presence of bound chloride precludes the use of this epoxy resin from many applications including electronics and coatings used in contact with food.

Example 1: Preparation and Characterization of the Diethylenetriamine Adduct of the Diglycidyl Ether of cis- and trans-2,2,4,4-Tetramethylcyclobutane-1,3-diol

A1L3 neck, glass, round bottom, reactor was charged under nitrogen with DETA (412.7 g, 4.0 moles, 20.0 amine hydrogen eq). The DETA used was a commercial grade product obtained from Sigma-Aldrich Chemical Company with a purity specification of 99 %. The reactor was additionally equipped with a condenser (maintained at 0 °C), a thermometer, a Claisen adaptor, an overhead nitrogen inlet (1 LPM $N_2$ used), and magnetic stirring. A portion (26.01 g, 0.20 epoxide eq) of DGE of TMCBD having an EEW of 130.07 was added to a side arm vented addition funnel, and then attached to the reactor. The TMCBD DGE used was from Preparative Example 1. Stirring and heating using a thermostatically controlled heating mantle commenced to give a 40 °C solution. Dropwise addition of the TMCBD DGE commenced while maintaining the reaction temperature at 40 °C. After 3.3 hr the dropwise addition was completed. The resultant pale yellow colored solution was stirred and maintained at 40°C for the next 40.3 hr followed by rotary evaporation at 80 °C to remove the bulk of the excess DETA. Additional rotary evaporation was completed using a maximum 140 °C oil bath temperature to a final vacuum of 0.45 mm Hg. A transparent, light yellow colored, liquid adduct product was recovered from the rotary evaporation (46.24 g). GC analysis of an aliquot of the adduct product revealed that complete reaction of all TMCBD DGE had occurred. Titration of a portion of the adduct indicated an AHEW of 62.54.

Example 2: Preparation and Curing of Thermosettable Blend of the Diethylenetriamine Adduct of the Diglycidyl Ether of cis- and trans-2,2,4,4-Tetramethylcyclobutane-1,3-diol and Diglycidyl Ether of cis- and trans-2,2,4,4-Tetramethylcyclobutane-1,3-diol

DGE of TMCBD (3.4031 g, 0.0262 epoxide eq) from Preparative Example 1 and DETA adduct of TMCBD from Example 1 (1.6362 g, 0.0262 N-H eq) were added to a glass vial and vigorously stirred together. Weighing was done using a balance with four decimal place accuracy. A portion (12.1 mg) of the homogeneous opaque mixture was immediately removed for DSC analysis. A second thermosettable blend was likewise prepared using DGE of TMCBD (1.5949 g, 0.0255 epoxide eq) and DETA adduct of TMCBD (3.3172 g, 0.0255 N-H eq) then analyzed by DSC. The results from the two separate DSC analyses were averaged. An exotherm attributed to curing was observed with a 46.6 °C onset, 119.9 °C maximum, and a 188.2 °C endpoint accompanied by an enthalpy of 201 J/g. The DSC results are summarized in Table 3. The cured product recovered from the DSC analysis was a transparent, rigid, light yellow colored solid.

Table 3

| Example | Onset (°C) | Maximum (°C) | End (°C) | Enthalpy (J/g) |
|---|---|---|---|---|
| Example 2 | 46.6 | 119.9 | 188.2 | 201 |
| Comparative Example 3 | 47.0 | 108.7 | 201.7 | 242 |

Example 3: Preparation of Clear, Unfilled Casting of Thermosettable Blend of the Diethylenetriamine Adduct of the Diglycidyl Ether of cis- and trans-2,2,4,4-Tetramethylcyclobutane-1,3-diol and Diglycidyl Ether of cis- and trans-2,2,4,4-Tetramethylcyclobutane-1,3-diol and Analysis of Glass Transition Temperature

The remaining portion of a curable blend from Example 2 was B-staged at 50 °C to a solution then added to an aluminum dish and cured in an oven for 1 hr at 100 °C then 1 hr at 150 °C. A portion (29.0 mg) of the transparent, pale yellow colored casting was removed for DSC analysis. A Tg of 85.1 °C was observed. A second scanning using the aforementioned conditions revealed a 84.1 °C Tg. A third scanning was completed with an increase in the final temperature to 300°C giving a Tg of 84.5 °C and a slight exothermic shift commencing at 276.3 °C. A fourth scanning using the aforementioned conditions gave a Tg of 87.2 °C and a slight exothermic shift at 285.6°C. A fifth scanning using the aforementioned conditions gave a Tg of 84.7 °C. These results are summarized in Table 4.

Table 4

| Example | DSC Scan Number | Tg(°C) | Exothermic Shift (°C) |
|---|---|---|---|
| Example 3 | 1 | 85.1 | none |
| Comparative Example 4 | 1 | 40.3 | 241.6 |
| Example 3 | 2 | 84.1 | none |
| Comparative Example 4 | 2 | 45.3 | none |

(continued)

| Example | DSC Scan Number | Tg(°C) | Exothermic Shift (°C) |
|---|---|---|---|
| Example 3 | 3 | 84.5 | 276.3 |
| Comparative Example 4 | 3 | 46.6 | 293.2[a] |
| Example 3 | 4 | 87.2 | 285.6 |
| Comparative Example 4 | 4 | 51.0 | 289.8 |
| Example 3 | 5 | 84.7 | none |
| Comparative Example 4 | 5 | 53.9 | 286.2 |
| a) Preceded by an endothermic shift with an onset at 271.2 °C. | | | |

Comparative Example 2: Preparation and Characterization of the Diethylenetriamine Adduct of the Diglycidyl Ether of cis- and trans-1,4-Cyclohexanedimethanol

A 1 L 3 neck, glass, round bottom, reactor was charged under nitrogen with DETA (412.7 g, 4.0 moles, 20.0 amine hydrogen eq). The DETA used was a commercial grade product obtained from Sigma-Aldrich Chemical Company with a purity specification of 99 %. The reactor was additionally equipped with a condenser (maintained at 0 °C), a thermometer, a Claisen adaptor, an overhead nitrogen inlet (1 LPM $N_2$ used), and magnetic stirring. A portion (26.00 g, 0.20 epoxide eq) of DGE of CHDM having an EEW of 130.00 was added to a side arm vented addition funnel, and then attached to the reactor. The DGE used was a fractionally vacuum distilled product containing 99.58 wt % DGE of CHDM, 0.19 wt % monoglycidyl ethers of CHDM, and 0.23 wt % of two minor unknowns associated with the DGE peaks. Stirring and heating using a thermostatically controlled heating mantle commenced to give a 40 °C solution. Dropwise addition of the DGE commenced while maintaining the reaction temperature at 40 °C. After 3.48 hr the dropwise addition was completed. The resultant pale yellow colored solution was stirred and maintained at 40°C for the next 41.5 hr followed by rotary evaporation at 80 °C to remove the bulk of the excess DETA. Additional rotary evaporation was completed using a maximum 140 °C oil bath temperatures to a vacuum of 0.30 mm Hg. A transparent, light yellow colored, liquid adduct product was recovered from the rotary evaporation (46.22 g). GC analysis of an aliquot of the adduct product revealed that complete reaction of all DGE had occurred. Titration of a portion of the adduct indicated an AHEW of 61.64.

Comparative Example 3: Preparation and Curing of Thermosettable Blend of the Diethylenetriamine Adduct of the Diglycidyl Ether of cis- and trans-1,4-Cyclohexanedimethanol and Diglycidyl Ether of cis- and trans-1,4-Cyclohexanedimethanol

DGE of CHDM (2.9917 g, 0.0230 epoxide eq) described as a reactant in Comparative Example 2 and DETA adduct of CHDM from Comparative Example 2 (1.4185 g, 0.0230 N-H eq) were added to a glass vial and vigorously stirred together. Weighing was done using a balance with four decimal place accuracy. A portion (9.1 mg) of the homogeneous opaque mixture was immediately removed for DSC analysis. A second thermosettable blend was likewise prepared using DGE of CHDM (3.1908 g, 0.0245 epoxide eq) and DETA adduct of CHDM (1.5129 g, 0.0245 N-H eq) then analyzed by DSC. The results from the two separate DSC analyses were averaged. An exotherm attributed to curing was observed with a 47.0 °C onset, 108.7 °C maximum, and a 201.7 °C endpoint accompanied by an enthalpy of 242 J/g. The cured product recovered from the DSC analysis was a transparent, rigid, light yellow colored solid. The results are summarized in Table 3.

Comparative Example 4: Preparation of Clear, Unfilled Casting of Thermosettable Blend of the Diethylenetriamine Adduct of the Diglycidyl Ether of cis- and trans-1,4-Cyclohexanedimethanol and Diglycidyl Ether of cis- and trans-1,4-Cyclohexanedimethanol and Analysis of Glass Transition Temperature

The remaining portion of a curable blend from Comparative Example 3 was B-staged at 50 °C to a solution then added to an aluminum dish and cured in an oven for 1 hr at 100 °C then 1 hr at 150 °C. A portion (20.7 mg) of the transparent, pale yellow colored casting was removed for DSC analysis. A Tg of 40.3 °C was observed, with a slight exothermic shift commencing at 241.6 °C. A second scanning using the aforementioned conditions revealed a 45.3 °C Tg. A third scanning was completed with an increase in the final temperature to 300°C giving a Tg of 46.6 °C and a slight exothermic shift commencing at 293.2 °C preceded by an endothermic shift with an onset at 271.2 °C. A fourth scanning using the aforementioned conditions gave a Tg of 51.0 °C and a slight exothermic shift at 289.8 °C. A fifth scanning

using the aforementioned conditions gave a Tg of 53.2 °C and a slight exothermic shift at 286.2 °C. The results are summarized in Table 4.

Comparative Example 5: Preparation and Curing of a Thermosettable Blend of Diglycidyl Ether of cis- and trans-1,3- and 1,4-Cyclohexanedimethanol and Diethylenetriamine

A portion (5.0226 g, 0.03900 epoxide eq) of DGE of UNOXOL™ Diol (cis- and trans-1,3- and 1,4-cyclohexanedimethanol) obtained from fractional vacuum distillation of the epoxy resin of UNOXOL™ Diol was added to a glass vial. GC analysis of the DGE demonstrated 99.49 wt % DGE, 0.16 wt % monoglycidyl ethers, 0.35 wt. % of a pair of minor peaks associated with the DGE peak. DETA (0.81 g, 0.03926 N-H eq) was added to the glass vial and then the contents were vigorously stirred together. A portion (11.4 mg) of the homogeneous solution was removed for DSC analysis. An exotherm attributed to curing was observed with a 44.9 °C onset, 116.8 °C maximum, and a 203.8 °C endpoint accompanied by an enthalpy of 719.7 J/g. The cured product recovered from the DSC analysis was a transparent, light yellow colored, rigid solid.

Comparative Example 6: Preparation of Clear, Unfilled Casting of Thermosettable Blends of Diglycidyl Ether of cis- and trans-1,3- and 1,4-Cyclohexanedimethanol and Diethylenetriamine and Analysis of Glass Transition Temperature

The remaining portion of the DGE of CHDM and DETA blend from Comparative Example 5 was added to an aluminum dish and cured in an oven using the following schedule: 1 hr at 70 °C, 1 hr at 100 °C, 1 hr at 125 °C, and 1 hr at 150 °C. The casting exhibited regions of deep channels or cracks which were first observed during the initial curing at 70 °C. The very high enthalpy on curing (Comparative Example 5) may be responsible for the channels propagated through the casting. Two separate samples of the casting were randomly taken and analyzed by DSC (28.5 mg for Sample 1 and 32.4 mg for Sample 2). In the DSC analyses of both Samples 1 and 2, residual exothermicity was present in the first scanning, indicating incomplete cure (Tables 5 and 6, respectively). Upon second scanning the residual exothermicity was no longer detected in Sample 2, but was still present Sample 1, but in a slightly reduced amount. The large enthalpy associated with this curable mixture (Comparative Example 5) may be responsible for the incomplete cure, with cure occurring so energetically that the mobility of amine groups and epoxide groups in the thermosetting matrix is restricted.

Table 5

| Tg (°C) | Onset of Residual Exothermicity (°C) | Peak Exotherm (°C) | End of Residual Exothermicity (°C) | Enthalpy (J/g) |
|---|---|---|---|---|
| 64.9 | 151.9 | 175.9 | 239.0 | 5.6 |
| 65.5 (second scan) | 157.0 | 179.3 | 224.8 | 4.7 |

Table 6

| Tg (°C) | Onset of Residual Exothermicity (°C) | Peak Exotherm (°C) | End of Residual Exothermicity (°C) | Enthalpy (J/g) |
|---|---|---|---|---|
| 62.9 | 155.8 | 180.6 | 241.4 | 3.6 |
| 62.4 (second scan) | none detected | | | |

Comparative Example 7: Preparation and Curing of Thermosettable Blend of the Diglycidyl Ether of cis- and trans-2,2,4,4-Tetramethylcyclobutane-1,3-diol and Diethylenetriamine

A portion (5.148 g, 0.0396 epoxide eq) of the DGE of TMCBD from Preparative Example 1 and DETA (0.818 g, 0.0396 N-H eq) were added to a glass vial and vigorously stirred together. Weighing was done using a balance with four decimal place accuracy. A portion (9.1 mg) of the homogeneous solution was immediately removed for DSC analysis. An exotherm attributed to curing was observed with a 44.9 °C onset, 114.0 °C maximum, and a 199.3 °C endpoint accompanied by an enthalpy of 661 J/g. The cured product recovered from the DSC analysis was a transparent, rigid solid with a very slightly pale yellow color.

Comparative Example 8: Preparation of Clear, Unfilled Casting of the Thermosettable Blend of the Diglycidyl Ether of cis- and trans-2,2,4,4-Tetramethylcyclobutane-1,3-diol and Diethylenetriamine and Analysis of Glass Transition Temperature

The remaining portion of the curable blend from Comparative Example 7 was added to an aluminum dish and cured in an oven using the following schedule: 1 hr at 70 °C, 1 hr at 100 °C, 1 hr at 125 °C, and 1 hr at 150 °C. A portion (35.3 mg) of the transparent, very slightly pale yellow colored casting was removed for DSC analysis. A Tg of 86 °C was observed, with no indication of further curing or exothermic decomposition observed up to the 250 °C DSC analysis temperature. A second scanning using the aforementioned conditions again revealed a 86 °C Tg. A third scanning was completed with an increase in the final temperature to 300°C giving a Tg of 87 °C and a slight exothermic shift commencing at 261 °C. A fourth scanning using the aforementioned conditions gave a Tg of 88 °C and a slight exothermic shift at 258 °C.

## Claims

1. An epoxy resin adduct comprising the reaction product of:

   an epoxy resin comprising a diglycidyl ether of Formula 1

   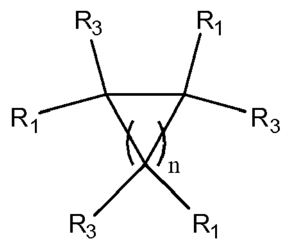 1

   wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and
   at least one reactive compound having two or more active hydrogen atoms per molecule, wherein the active hydrogen atoms are reactive with epoxide groups.

2. The epoxy resin adduct of claim 1, wherein each glycidyl ether group independently has the Formula 2

   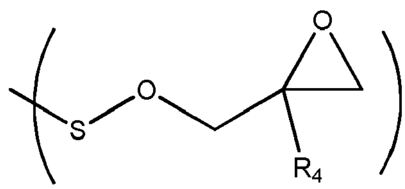 2

   wherein $R_4$ is hydrogen or $C_{1-4}$ alkyl, and S is a direct bond, $C_{1-12}$ alkylene, or $C_{6-24}$ arylene.

3. The epoxy resin adduct of claim 1, wherein the epoxy resin has an oxirane oxygen content of greater than or equal to 90 % of theoretical for the diglycidyl ether and/or wherein the epoxy resin adduct has a total chlorine content of less than or equal to 2 weight %.

4. The epoxy resin adduct of claim 1, wherein the diglycidyl ether comprises cis-and trans-2,2,4,4-tetramethylcyclobutane-1,3-diglycidyl ether.

5. The epoxy resin adduct of claim 4, wherein the epoxy resin has an oxirane oxygen content of greater than or equal to 11.2 weight % and an epoxide equivalent weight of less than or equal to 142.5.

6. The epoxy resin adduct of claim 1, wherein:

i) the reactive compound comprises a di- or polyphenol, a di- or polycarboxylic acid, a di- or polymercaptan, a di- or polyamine, a primary monoamine, a primary sulfonamide, a sulfanilamide, an aminophenol, an aminocarboxylic acid, a phenolic hydroxyl containing carboxylic acid , or a combination thereof; or
ii) the reactive compound comprises ammonia; and wherein the ammonia is liquified ammonia ($NH_3$) or ammonium hydroxide ($NH_4OH$); or
iii) the reactive compound comprises a di- or polyamine, a primary monoamine, or a combination thereof.

**7.** The epoxy resin adduct of claim 1, wherein the ratio of equivalents of active hydrogen atoms in the reactive compound to equivalents of epoxide group in the epoxy resin is 2:1 to 500:1.

**8.** A method of making the epoxy resin adduct of claim 1, comprising reacting the epoxy resin comprising the diglycidyl ether of Formula 1

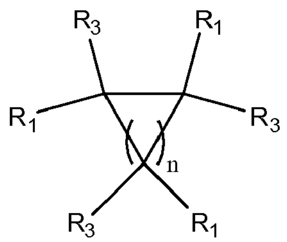

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups, with at least one reactive compound having two or more active hydrogen atoms per molecule, wherein the active hydrogen atoms are reactive with epoxide groups.

**9.** A curable epoxy resin composition comprising the epoxy resin adduct as claimed in any one of claims 1 to 7 and at least one epoxy resin.

**10.** A method of curing a curable epoxy resin composition comprising reacting the epoxy resin adduct as claimed in any one of claims 1 to 7 with at least one epoxy resin.

**11.** The curable composition of claim 9 or method of claim 10, wherein:

i) the at least one epoxy resin comprises (a) an oligomeric polyfunctional aliphatic or cycloaliphatic epoxy resin, (b) an epoxy resin other than the oligomeric polyfunctional aliphatic or cycloaliphatic epoxy resin, or (c) a mixture of epoxy resin (a) and epoxy resin (b); or
ii) the at least one epoxy resin comprises cis- and trans-2,2,4,4-tetramethylcyclobutane-1,3-diglycidyl ether.

**12.** A B-staged epoxy resin made by partially curing the curable epoxy resin composition of claim 9.

**13.** A method ofB-staging an epoxy resin comprising partially curing the curable epoxy resin composition of claim 9.

**14.** A cured epoxy resin comprising a reaction product of the epoxy resin adduct as claimed in any one of claims 1 to 7 and at least one epoxy resin.

**15.** An article made from the curable epoxy resin composition of claim 9, wherein the article is preferably a coating, an electrical or structural laminate, an electrical or structural composite, a filament winding, a molding, a casting, a potting, or an encapsulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **JAY, R.R.** Direct Titration of Epoxy Compounds and Aziridines. *Analytical Chemistry,* March 1964, vol. 36 (3), 667-668